# EUROPEAN PATENT SPECIFICATION

(11) **EP 2 838 027 B1**
(45) Date of publication and mention of the grant of the patent: **09.12.2020**
(21) Application number: 12887001.1
(22) Date of filing: 23.10.2012
(51) Int. Cl.: G06F 12/08, G06F 3/06, G06F 3/08

(54) **METHOD AND APPARATUS FOR EXPANDING STORAGE SPACE**
VERFAHREN UND VORRICHTUNG ZUR ERWEITERUNG DES SPEICHERPLATZES
PROCÉDÉ ET APPAREIL PERMETTANT D'ACCROÎTRE UN ESPACE DE STOCKAGE

(43) Date of publication of application: 18.02.2015
(73) Proprietor: Huawei Device Co., Ltd., Dongguan, Guangdong 523808 (CN)
(72) Inventor: SHI, Haimou, Shenzhen Guangdong 518129 (CN)
(74) Representative: Goddar, Heinz J.
(86) International application number: PCT/CN2012/083379
(87) International publication number: WO 2014/063308

(56) References cited:
- CN-A- 1 506 840
- CN-A- 102 158 852
- US-A1- 2008 086 620
- US-A1- 2009 300 020
- Anonymous: "Bluetooth - How to browse files on a device? - Ask Ubuntu", , 22 October 2012 (2012-10-22), XP055208607, Retrieved from the Internet: URL:http://askubuntu.com/questions/204716/ bluetooth-how-to-browse-files-on-a-device [retrieved on 2015-08-19]
- Anonymous: "P3nfs", , 19 October 2005 (2005-10-19), XP055208937, Retrieved from the Internet: URL:http://www.koeniglich.de/p3nfs.html [retrieved on 2015-08-21]
- Anonymous: "P3nfs", , 9 October 2012 (2012-10-09), XP055469187, Retrieved from the Internet: URL:http://web.archive.org/web/20121009005 917/http://www.koeniglich.de:80/p3nfs.html [retrieved on 2018-04-20]

## Description

### TECHNICAL FIELD

The present invention relates to the field of communications technologies, and in particular, to a method and an apparatus for expanding a storage space.

### BACKGROUND

With the rapid development of various types of terminals, a bluetooth technology has almost already become a standard function of each terminal, and is mainly used for a short-distance data transmission service, such as, used for file transmission between terminals. One terminal sends a file, the other terminal receives the file, and for the opposite party, the two terminals are each a black box, and are invisible.

The prior art has at least the following disadvantage: When a first terminal sends a file to a second terminal through bluetooth, a storage space of the second terminal is invisible to the first terminal, which is inconvenient for file storage.

In this regard, US 2009/300020 A1 teaches a wireless virtual storage apparatus and a remote file accessing method for a multimedia electronic device accessing remote files in a remote database. The apparatus includes a wireless network interface, microprocessor, and bus interface. The microprocessor runs a file system program, so as to create a virtual partition. Then the processor connects to a removable storage media reader of the multimedia electronic device via the bus interface, and the virtual partition is mounted by the multimedia electronic device. The microprocessor logs in the remote database via the wireless network interface, and creates virtual files in the virtual partition corresponding to the remote files. When the multimedia electronic device accessing the virtual files, the microprocessor loads the remote files from the remote database and changes the accessing path of the multimedia electronic device to the loaded remote files.

### SUMMARY

Embodiments of the present invention as defined in the independent claims provide a method and an apparatus for expanding a storage space, which implement that, under a precondition of not increasing a storage space of a first terminal, a storage space of a second terminal is used as a virtual disk of the first terminal, thereby increasing the storage space of the first terminal.

### BRIEF DESCRIPTION OF DRAWINGS

To describe the technical solutions in the embodiments of the present invention more clearly, accompanying drawings for describing the embodiments of the present invention are briefly introduced in the following. Apparently, the accompanying drawings in the following description are only some embodiments of the present invention, and persons of ordinary skill in the art may further obtain other drawings according to these accompanying drawings without creative efforts.
FIG. 1 is a flow chart of a method for expanding a storage space according to Embodiment 1 of the present invention;
FIG. 2 is a flow chart of another method for expanding a storage space according to Embodiment 1 of the present invention;
FIG. 3 is a flow chart of still another method for expanding a storage space according to Embodiment 1 of the present invention;
FIG. 4 is a flow chart of yet another method for expanding a storage space according to Embodiment 1 of the present invention;
FIG. 5 is a flow chart of yet another method for expanding a storage space according to Embodiment 1 of the present invention;
FIG. 6 is a flow chart of yet another method for expanding a storage space according to Embodiment 1 of the present invention;
FIG. 7 is a flow chart of yet another method for expanding a storage space according to Embodiment 1 of the present invention;
FIG. 8 is a structural diagram of an apparatus for expanding a storage space according to Embodiment 2 of the present invention;
FIG. 9 is a structural diagram of another apparatus for expanding a storage space according to Embodiment 2 of the present invention;
FIG. 10 is a structural diagram of still another apparatus for expanding a storage space according to Embodiment 2 of the present invention;
FIG. 11 is a structural diagram of yet another apparatus for expanding a storage space according to Embodiment 2 of the present invention;
FIG. 12 is a structural diagram of yet another apparatus for expanding a storage space according to Embodiment 2 of the present invention;
FIG. 13 is a structural diagram of yet another apparatus for expanding a storage space according to Embodiment 2 of the present invention;
FIG. 14 is a structural diagram of an apparatus for expanding a storage space according to Embodiment 3 of the present invention;
FIG. 15 is a structural diagram of another apparatus for expanding a storage space according to Embodiment 3 of the present invention; and
FIG. 16 is a structural diagram of still another apparatus for expanding a storage space according to Embodiment 3 of the present invention.

### DESCRIPTION OF EMBODIMENTS

A method and an apparatus for expanding a storage space according to the embodiments of the present invention are described in detail in the following with reference to the accompanying drawings.

A first terminal and a second terminal in the embodiments of the present invention both are a mobile phone or another mobile terminal using an Android (android) system, and the two terminals perform instruction interaction in specific clients of the two terminals.

### Embodiment 1

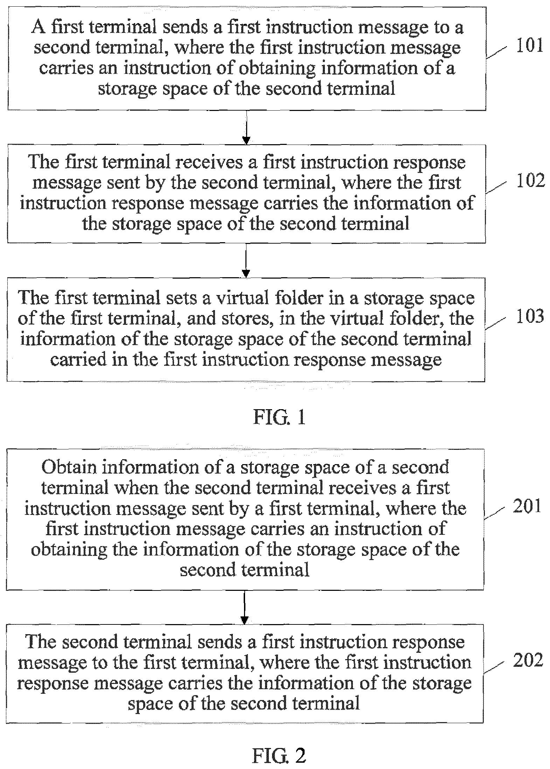

The embodiment of the present invention provides a method for expanding a storage space, and as shown in FIG. 1, the method includes the following steps:
101: A first terminal sends a first instruction message to a second terminal, where the first instruction message carries an instruction of obtaining information of a storage space of the second terminal.

The manner of message transmission between the first terminal and the second terminal is bluetooth. Description is given by taking that the first terminal and the second terminal establish a bluetooth connection. After the first terminal and the second terminal establish the bluetooth connection, a user may choose to enable, on a client of the first terminal, a function of expanding the storage space of the second terminal into a storage space of the first terminal; or while the first terminal and the second terminal establish a bluetooth connection, the first terminal automatically enables the function, and similar means are all acceptable, and are not limited here.

As long as it is ensured that a defined first instruction message can be distinguished from a general bluetooth transmission file, a format of the first instruction message may be defined randomly, and the first instruction message is parsable to the first terminal and the second terminal. For example, the first instruction message is encapsulated in a form of .txt file for transmission, and a file name is handset B to handset A.txt, which indicates that the first terminal performs a relevant operation on the storage space of the second terminal. The second terminal determines, by parsing a received file, what specific operation it is.

The instruction in the first instruction message may be indicated by using hexadecimal, and a format is 00 01 02 03 02 A6 10 0D 0A, where "00 01 02 03 02 A6" is a prefix of the first instruction message, "10" indicates the instruction of obtaining the information of the storage space of the second terminal, and "0D 0A" is a suffix of the first instruction message, and indicates that the instruction message is ended.

102: The first terminal receives a first instruction response message sent by the second terminal, where the first instruction response message carries the information of the storage space of the second terminal.

As long as it is ensured that a defined first instruction response message can be distinguished from a general bluetooth transmission file, a format of the first instruction response message may be defined randomly, and the first instruction response message is parsable to the first terminal and the second terminal. For example, the first instruction response message is encapsulated in a form of .txt file for transmission.

When the first terminal receives a file with a file name of handset B to handset A.txt, it indicates that the second terminal responds to the file with a same file name sent by the first terminal. An instruction in the first instruction response message may be indicated by using hexadecimal. When the storage space of the second terminal stores two files, whose file names are one.txt and two.txt respectively, the first instruction response message includes two instructions, and formats of the two instructions are respectively shown in the following:
A format of a first instruction carrying a file name of one.txt is 00 01 02 03 02 A6 11 08 00 6F 6E 65 2E 74 78 74 0D 0A, where "00 01 02 03 02 A6" is a prefix of the first instruction, "11" indicates a key word corresponding to the first instruction message, and is used to indicate that the first instruction message carries the information of the storage space of the second terminal, "08" is used to indicate that the number of effective bytes of the file name of the file one.txt stored in the storage space of the second terminal is 8, namely, an 8-byte ASCII code after "08" indicates the file name of the file, "00 6F 6E 65 2E 74 78 74" indicates that the file name is "one.txt", and "0D 0A" is a suffix of the first instruction, and indicates that the first instruction is ended.

A format of a second instruction carrying a file name of two.txt is 00 01 02 03 02 A6 11 08 00 74 77 6F 2E 74 78 74 0D 0A, where "00 01 02 03 02 A6" is a prefix of the second instruction, "11" indicates a key word corresponding to the first instruction message, and is used to indicate that the file is used to carry the information of the storage space of the second terminal, "08" is used to indicate that the number of effective bytes of the file name of the file two.txt stored in the storage space of the second terminal is 8, namely, an 8-byte ASCII code after "08" indicates the file name of the file, "00 74 77 6F 2E 74 78 74" indicates that the file name is "two.txt", and "0D 0A" is a suffix of the second instruction, and indicates that the second instruction is ended.

For the foregoing one.txt and two.txt, the first instruction response message may also carry storage paths of the two files, such as ./one.txt, and ./two.txt, which indicate that these two files are stored under a root directory of the storage space of the second terminal, and formats of the two instructions included in the first instruction response message are respectively shown in the following:
A format of the first instruction that carries a storage path ./one.txt of a file name one.txt is 00 01 02 03 02 A6 11 10 00 2E 2F 6F 6E 65 2E 74 78 74 0D 0A, where "00 01 02 03 02 A6" is a prefix of the first instruction, "11" indicates a key word corresponding to the first instruction message, and is used to indicate that the first instruction message carries the information of the storage space of the second terminal, "10" is used to indicate that the number of effective bytes of the storage path of the file one.txt stored in the storage space of the second terminal is 10, namely, a 10-byte ASCII code after "10" indicates the storage path of the file, "00 2E 2F 6F 6E 65 2E 74 78 74" indicates that the file storage path is ./one.txt, where the file name is "one.txt", and "0D 0A" is a suffix of the first instruction, and indicates that the first instruction is ended.

A format of the second instruction that carries a storage path ./two.txt of a file name two.txt is 00 01 02 03 02 A6 11 10 00 2E 2F 74 77 6F 2E 74 78 74 0D 0A, where "00 01 02 03 02 A6" is a prefix of the second instruction, "11" indicates a key word corresponding to the first instruction message, and is used to indicate that the file is used to carry the information of the storage space of the second terminal, "10" is used to indicate that the number of effective bytes of the file storage path of the file two.txt stored in the storage space of the second terminal is 10, namely, a 10-byte ASCII code after "10" indicates the storage path of the file, "00 2E 2F 74 77 6F 2E 74 78 74" indicates that the file storage path is ./two.txt, where the file name is "two.txt", and "0D 0A" is a suffix of the second instruction, and indicates that the second instruction is ended.

When the storage space of the second terminal further stores a folder shm, and the folder shm has a file one.txt, the first instruction response message further includes a third instruction, and a format of the third instruction is as follows:
The format of the third instruction carrying a file name of one.txt in the folder shm is 00 01 02 03 02 A6 11 12 00 73 68 6D 2F 6F 6E 65 2E 74 78 74 0D 0A, where "00 01 02 03 02 A6" is a prefix of the third instruction, "11" indicates a key word corresponding to the first instruction message, and is used to indicate that the file is used to carry the information of the storage space of the second terminal, "12" is used to indicate that the number of effective bytes of the information of the storage space of the second terminal is 12, namely, a 12-byte ASCII code after "12" indicates the folder and content in the folder, "00 73 68 6D 2F 6F 6E 65 2E 74 78 74" indicates a path shm/one.txt, and "0D 0A" is a suffix of the third instruction, and indicates that the third instruction is ended.

103: The first terminal sets a virtual folder in the storage space of the first terminal, and stores, in the virtual folder, the information of the storage space of the second terminal carried in the first instruction response message.

The first terminal maps, by setting a virtual folder, the information of the storage space of the second terminal to the virtual folder, so that the storage space of the second terminal is completely visible to the first terminal; when the user operates the virtual folder, operations such as duplication and copy of a file may be supported as the storage space of the first terminal is operated. The storage space may be an SD (Secure Digital Memory Card, secure digital memory card) or another memory card of a terminal.

In the method for expanding a storage space provided by the embodiment of the present invention, a first terminal sends a first instruction message to a second terminal, where the first instruction message carries an instruction of obtaining information of a storage space of the second terminal; and after receiving a first instruction response message sent by the second terminal, sets a virtual folder in a storage space of the first terminal, and stores, in the virtual folder, the information of the storage space of the second terminal carried in the first instruction response message. In the embodiment of the present invention, it is implemented that, under a precondition of not increasing a storage space of a first terminal, a storage space of a second terminal is used as a virtual disk of the first terminal, thereby increasing the storage space of the first terminal.

Correspondingly, the embodiment of the present invention further provides a method for expanding a storage space, and as shown in FIG. 2, the method includes the following steps:
201: Obtain information of a storage space of a second terminal when the second terminal receives a first instruction message sent by a first terminal, where the first instruction message carries an instruction of obtaining the information of the storage space of the second terminal.

A manner of message transmission between the first terminal and the second terminal is bluetooth. Description is given by taking that the first terminal and the second terminal establish a bluetooth connection. After the first terminal and the second terminal establish the bluetooth connection, the second terminal receives, through bluetooth, the first instruction message sent by the first terminal. As long as it is ensured that a defined first instruction message can be distinguished from a general bluetooth transmission file, a format of the first instruction message may be defined randomly, and the first instruction message is parsable to the first terminal and the second terminal. For example, the first instruction message is encapsulated in a form of .txt file for transmission, and a file name is handset B to handset A.txt, which indicates that the first terminal performs a relevant operation on the storage space of the second terminal. The second terminal determines, by parsing a received file, what specific operation it is.

The instruction in the first instruction message may be indicated by using hexadecimal, and a format is 00 01 02 03 02 A6 10 0D 0A, where "00 01 02 03 02 A6" is a prefix of the first instruction message, "10" indicates an instruction of obtaining storage content in the storage space of the second terminal, and "0D 0A" is a suffix of the first instruction message, and indicates that the instruction message is ended.

202: The second terminal sends a first instruction response message to the first terminal, where the first instruction response message carries the information of the storage space of the second terminal.

As long as it is ensured that a defined first instruction response message can be distinguished from a general bluetooth transmission file, a format of the first instruction response message may be defined randomly, and the first instruction response message is parsable to the first terminal and the second terminal. For example, the first instruction response message is encapsulated in a form of .txt file for transmission.

The second terminal carries the obtained file name in the first instruction response message, and sends the first instruction response message to the first terminal. For example, a file name of the first instruction response message is also handset B to handset A.txt, and is used to be distinguished from general bluetooth transmission data. The instruction in the first instruction response message may be indicated by using hexadecimal. When the storage space of the second terminal stores two files, whose file names are one.txt and two.txt respectively, the first instruction response message includes two instructions, and formats of the two instructions are respectively shown in the following:
A format of a first instruction carrying a file name of one.txt is 00 01 02 03 02 A6 11 08 00 6F 6E 65 2E 74 78 74 0D 0A, where "00 01 02 03 02 A6" is a prefix of the first instruction, "11" indicates a key word corresponding to the first instruction message, and is used to indicate that the first instruction message carries the information of the storage space of the second terminal, "08" is used to indicate that the number of effective bytes of the file name of the file one.txt stored in the storage space of the second terminal is 8, namely, an 8-byte ASCII code after "08" indicates the file name of the file, "00 6F 6E 65 2E 74 78 74" indicates that the file name is "one.txt", and "0D 0A" is a suffix of the first instruction, and indicates that the first instruction is ended.

A format of a second instruction carrying a file name of two.txt is 00 01 02 03 02 A6 11 08 00 74 77 6F 2E 74 78 74 0D 0A, where "00 01 02 03 02 A6" is a prefix of the second instruction, "11" indicates a key word corresponding to the first instruction message, and is used to indicate that the file is used to carry the information of the storage space of the second terminal, "08" is used to indicate that the number of effective bytes of the file name of the file two.txt stored in the storage space of the second terminal is 8, namely, an 8-byte ASCII code after "08" indicates the file name of the file, "00 74 77 6F 2E 74 78 74" indicates that the file name is "two.txt", and "0D 0A" is a suffix of the second instruction, and indicates that the second instruction is ended.

For the foregoing one.txt and two.txt, the first instruction response message may also carry storage paths of the two files, such as ./one.txt, and ./two.txt, which indicate that these two files are stored under a root directory of the storage space of the second terminal.

When the storage space of the second terminal further stores a folder shm, and the folder shm has a file one.txt, the first instruction response message further includes a third instruction, and a format of the third instruction is as follows:
The format of the third instruction carrying a file name of one.txt in the folder shm is 00 01 02 03 02 A6 11 12 00 73 68 6D 2F 6F 6E 65 2E 74 78 74 0D 0A, where "00 01 02 03 02 A6" is a prefix of the third instruction, "11" indicates a key word corresponding to the first instruction message, and is used to indicate that the file is used to carry the information of the storage space of the second terminal, "12" is used to indicate that the number of effective bytes of the information of the storage space of the second terminal is 12, namely, a 12-byte ASCII code after "12" indicates the folder and content in the folder, "00 73 68 6D 2F 6F 6E 65 2E 74 78 74" indicates a path shm/one.txt, and "0D 0A" is a suffix of the third instruction, and indicates that the third instruction is ended.

By sending the information in the storage space of the second terminal to the first terminal, the storage space of the second terminal is mapped to the virtual folder of the first terminal, so that the storage space of the second terminal is completely visible to the first terminal; when a user operates the virtual folder, operations such as duplication and copy of a file may be supported as the storage space of the first terminal is operated. The storage space may be an SD (Secure Digital Memory Card, secure digital memory card) or another memory card of a terminal.

In the method for expanding a storage space provided by the embodiment of the present invention, when receiving a first instruction message sent by a first terminal, a second terminal obtains information of a storage space of the second terminal, and sends the information of the storage space of the second terminal to the first terminal through a first instruction response message. In the embodiment of the present invention, it is implemented that, under a precondition of not increasing a storage space of a first terminal, a storage space of a second terminal is used as a virtual disk of the first terminal, thereby increasing the storage space of the first terminal.

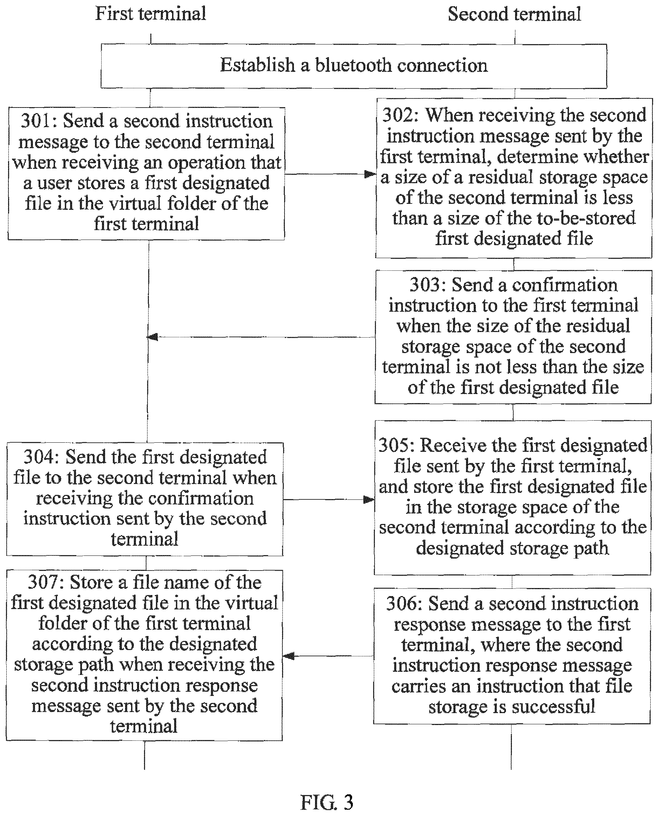

In a first implementation manner of the embodiment of the present invention, a method for expanding a storage space is provided. As shown in FIG. 3, after the first terminal maps the information in the storage space of the second terminal to the virtual folder, the method further includes the following steps:
301: The first terminal sends a second instruction message to the second terminal when receiving an operation that a user stores a first designated file in the virtual folder of the first terminal, where the second instruction message carries an instruction of storing a file in the storage space of the second terminal, a designated storage path and a size of the to-be-stored first designated file.

For example, if the user does not intend to occupy the storage space of the first terminal, but intends to store the first designated file in the virtual folder, the first terminal receives the operation that the user stores the first designated file in the virtual folder of the first terminal, and then the first terminal sends the second instruction message to the second terminal through bluetooth.

As long as it is ensured that a defined second instruction message can be distinguished from a general bluetooth transmission file, a format of the second instruction message may be defined randomly, and the second instruction message is parsable to the first terminal and the second terminal. For example, the second instruction message is encapsulated in a form of .txt file for transmission, and a file name is handset B to handset A.txt, which indicates that the first terminal performs a relevant operation on the storage space of the second terminal. The second terminal determines, by parsing a received file, what specific operation it is. For example, when a file with a file name of shm.txt is stored in a folder shm in a SD card of the second terminal, the format of the second instruction message is shown in the following:
00 01 02 03 02 A6 12 20 18 73 64 63 61 72 64 2F 73 68 6D 2F 73 68 6D 2E 74 78 74 22 04 00 00 04 00 0D 0A, where "00 01 02 03 02 A6" is a prefix of the second instruction message, "12" indicates a key word corresponding to the second instruction message, and is used to indicate that the file is to notify the second terminal to store, according to the designated storage path, the file in the storage space of the second terminal, and determine, according to the size of the carried to-be-stored file, whether a residual storage space of the second terminal can store the first designated file, "20" indicates a key word corresponding to the designated storage path, and is used to indicate the storage path of the first designated file, "18" indicates that the number of effective bytes of the carried designated storage path is 18, namely, the following "73 64 63 61 72 64 2F 73 68 6D 2F 73 68 6D 2E 74 78 74" indicates that the designated storage path is sdcard/shm/shm.txt, "22" indicates a key word corresponding to the size of the first designated file, and is used to indicate the size of the first designated file, "04" indicates that the number of effective bytes of the size of the carried first designated file is 4, namely, the following "00 00 04 00" indicates the size of the first designated file with a unit of kByte, where "04 00" indicates that the size of the first designated file is 1kByte, and "0D 0A" is a suffix of the second instruction message, and indicates that the instruction message is ended.

302: When the second terminal receives the second instruction message sent by the first terminal, the second terminal determines whether a size of the residual storage space of the second terminal is less than the size of the to-be-stored first designated file, where the second instruction message carries the instruction of storing a file in the storage space of the second terminal, the designated storage path and the size of the first designated file.

The second terminal acquires, by parsing the second instruction message, that the second terminal is to store the first designated file in the storage space of the second terminal, where the second instruction message carries the size of the first designated file, so that it is convenient for the second terminal to determine whether the residual storage space can store the first designated file.

303: The second terminal sends a confirmation instruction to the first terminal when the size of the residual storage space of the second terminal is not less than the size of the first designated file, where the confirmation instruction indicates that the storage space of the second terminal is capable of storing the first designated file.

When the size of the residual storage space of the second terminal is greater than or equal to the size of the first designated file, it indicates that the storage space of the second terminal is capable of storing the first designated file, and the second terminal sends a confirmation instruction to the first terminal. The confirmation instruction is only a general bluetooth confirmation instruction that the to-be-transmitted file can be received, which may be implemented by utilizing the prior art.

304: The first terminal sends the first designated file to the second terminal when the first terminal receives the confirmation instruction sent by the second terminal, where the confirmation instruction indicates that the storage space of the second terminal is capable of storing the first designated file.

The confirmation instruction is only a general bluetooth confirmation instruction that the to-be-transmitted file can be received, which may be implemented by utilizing the prior art.

305: The second terminal receives the first designated file sent by the first terminal, and stores the first designated file in the storage space of the second terminal according to the designated storage path.

306: The second terminal sends a second instruction response message to the first terminal, where the second instruction response message carries an instruction that file storage is successful.

After storing the first designated file in the storage space according to the designated storage path, the second terminal sends the second instruction response message to the first terminal. As long as it is ensured that a defined second instruction response message can be distinguished from a general bluetooth transmission file, a format of the second instruction response message may be defined randomly, and the second instruction response message is parsable to the first terminal and the second terminal. For example, the second instruction response message is encapsulated in a form of .txt file for transmission. A file name is still handset B to handset A.txt, so that it is convenient for the first terminal to distinguish the second instruction response message and other ordinary bluetooth transmission files. The format of the second instruction response message is shown in the following:
00 01 02 03 02 A6 13 0D 0A, where "00 01 02 03 02 A6" is a prefix of the second instruction response message, "13" indicates a key word corresponding to the second instruction response message, and is used to indicate that the file is to notify the first terminal that the second terminal has already successfully stored the first designated file in the storage space, and "0D 0A" is a suffix of the second instruction response message, and indicates that the response message is ended.

307: The first terminal stores a file name of the first designated file in the virtual folder of the first terminal according to the designated storage path when the first terminal receives the second instruction response message sent by the second terminal, where the second instruction response message carries an instruction that file storage is successful.

When the first terminal receives, through bluetooth, the second instruction response message whose file name is still handset B to handset A.txt and which is sent by the second terminal, it indicates that what is sent by the second terminal is a response message of an operation performed by the first terminal on the storage space of the second terminal, which indicates that the first designated file has already been successfully stored in the storage space of the second terminal.

In order that the virtual folder is kept consistent with the storage space of the second terminal, the file name of the first designated file is stored in the virtual folder according to the designated storage path, so that it is convenient for the user to check in future.

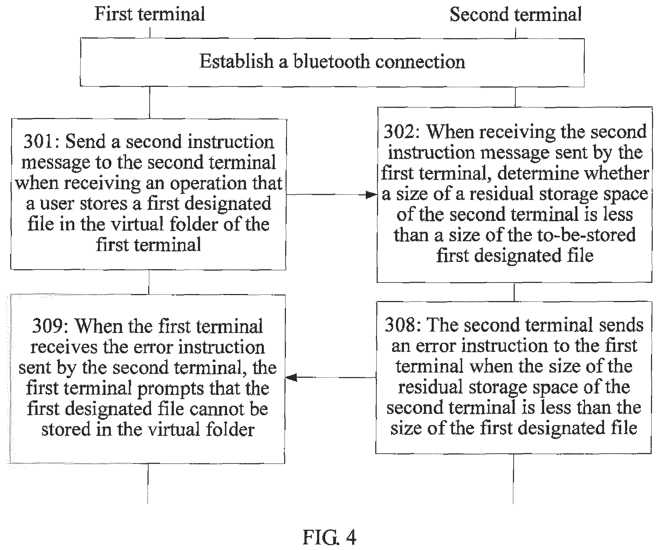

As shown in FIG. 4, the implementation manner of FIG. 3 further includes the following steps:
308: The second terminal sends an error instruction to the first terminal when the size of the residual storage space of the second terminal is less than the size of the first designated file, where the error instruction indicates that the residual storage space of the second terminal is less than the size of the first designated file.

The error instruction is only a general bluetooth error instruction, which indicates that the to-be-transmitted file cannot be received, and may be implemented by utilizing the prior art.

309: When the first terminal receives the error instruction sent by the second terminal, the first terminal prompts that the first designated file cannot be stored in the virtual folder, where the error instruction indicates that the residual storage space of the second terminal is less than the size of the first designated file.

After receiving the error instruction, the first terminal does not send the to-be-stored first designated file to the second terminal anymore.

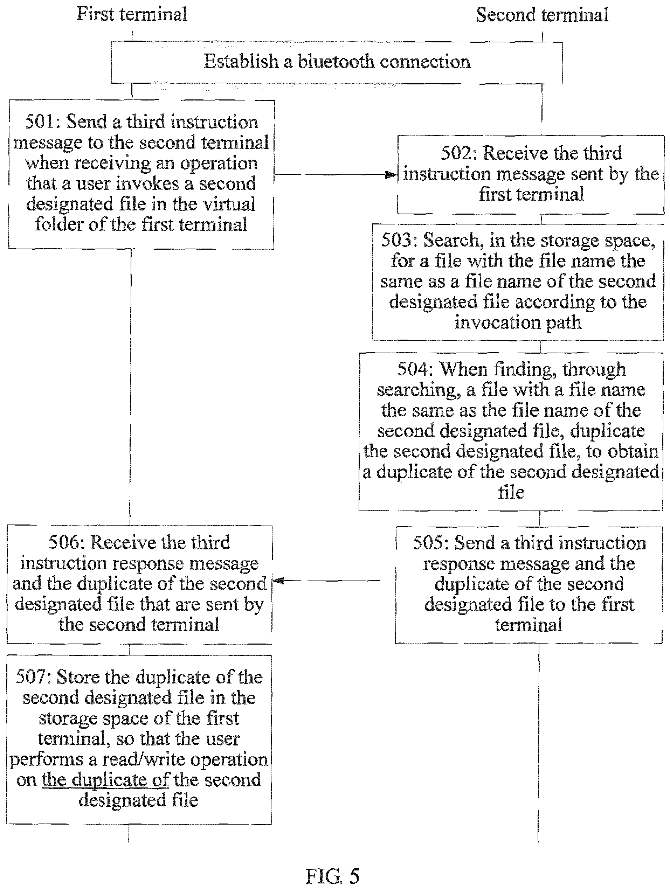

In a second implementation manner of the embodiment of the present invention, a method for expanding a storage space is provided. As shown in FIG. 5, after the first terminal maps the information in the storage space of the second terminal to the virtual folder, the method further includes the following steps:
501: The first terminal sends a third instruction message to the second terminal when receiving an operation that a user invokes a second designated file in the virtual folder of the first terminal, where the third instruction message carries an instruction of invoking a file from the storage space of the second terminal and an invocation path of the second designated file, and the invocation path of the second designated file includes a file name of the second designated file.

When the user intends to read or edit the second designated file in the virtual folder of the first terminal, the second designated file is invoked from the virtual folder, and the first terminal sends the third instruction message to the second terminal.

As long as it is ensured that a defined third instruction message can be distinguished from a general bluetooth transmission file, a format of the third instruction message may be defined randomly, and the third instruction message is parsable to the first terminal and the second terminal. For example, the thirdinstruction message is encapsulated in a form of .txt file for transmission, and a file name is handset B to handset A.txt, which indicates that the first terminal performs a relevant operation on the storage space of the second terminal, and the second terminal obtains specific operation content by parsing received file content. When the user is to invoke a file one.txt in a folder shm in a SD of the second terminal, the third instruction message may be indicated by utilizing hexadecimal, and the format is shown in the following:
00 01 02 03 02 A6 14 18 73 64 63 61 72 64 2F 73 68 6D 2F 6F 6E 65 2E 74 78 74 0D 0A, where "00 01 02 03 02 A6" is a prefix of the third instruction message, "14" indicates a key word corresponding to the third instruction message, and is used to indicate that the first terminal is to invoke the second designated file in the storage space of the second terminal, "18" is used to indicate that the number of effective bytes of the invocation path for invoking the second designated file is 18, an 18-byte ASCII code after "18" indicates the invocation path, "73 64 63 61 72 64 2F 73 68 6D 2F 6F 6E 65 2E 74 78 74" indicates the invocation path sdcard/shm/one.txt, where the last one.txt is the file name of the second designated file, and "0D 0A" is a suffix of the third instruction message, and indicates that the instruction message is ended.

502: The second terminal receives the third instruction message sent by the first terminal, where the third instruction message carries the instruction of invoking a file from the storage space of the second terminal and the invocation path of the second designated file, and the invocation path of the second designated file includes the file name of the second designated file.

503: The second terminal searches, in the storage space, for a file with a file name the same as the file name of the second designated file according to the invocation path.

When receiving the third instruction message, the second terminal obtains, by parsing the third instruction message, the invocation path sdcard/shm/one.txt of the second designated file with the file name of "one.txt" to be invoked by the first terminal, and searches, in the storage space, for the file with the file name of "one.txt" according to the invocation path.

504: When finding, through searching, a file with a file name the same as the file name of the second designated file, the second terminal duplicates the second designated file, to obtain a duplicate of the second designated file.

505: The second terminal sends a third instruction response message and the duplicate of the second designated file to the first terminal, where the third instruction response message carries an instruction that file invocation is successful.

When the second designated file with the file name of one.txt is found through searching, the second designated file is duplicated to obtain a duplicate of the file, and the duplicate is sent to the first terminal through bluetooth. Additionally, the second designated file still exists in the storage space of the second terminal, so that it is convenient for the user to invoke later.

The second terminal further sends the third instruction response message to the first terminal. As long as it is ensured that a defined third instruction response message can be distinguished from a general bluetooth transmission file, a format of the third instruction response message may be defined randomly, and the third instruction response message is parsable to the first terminal and the second terminal. For example, the third instruction response message is encapsulated in a form of .txt file for transmission, and the file format is shown in the following:
00 01 02 03 02 A6 15 ff 0D 0A, where "00 01 02 03 02 A6" is a prefix of the third instruction response message, "15" indicates a key word corresponding to the third instruction response message, "ff" indicates that file invocation is successful, and "0D 0A" is a suffix of the third instruction response message, and indicates that the response message is ended.

506: The first terminal receives the third instruction response message and the duplicate of the second designated file that are sent by the second terminal, where the third instruction response message carries the instruction that file invocation is successful.

507: The first terminal stores the duplicate of the second designated file in the storage space of the first terminal, so that the user performs a read/write operation on the duplicate of the second designated file.

When receiving the third instruction response message and the duplicate of the second designated file through bluetooth, the first terminal stores the duplicate of the second designated file in the storage space of the first terminal, and the user may read or edit the duplicate of the second designated file in the storage space of the first terminal. Additionally, the file name of the second designated file still exists in the virtual folder of the first terminal.

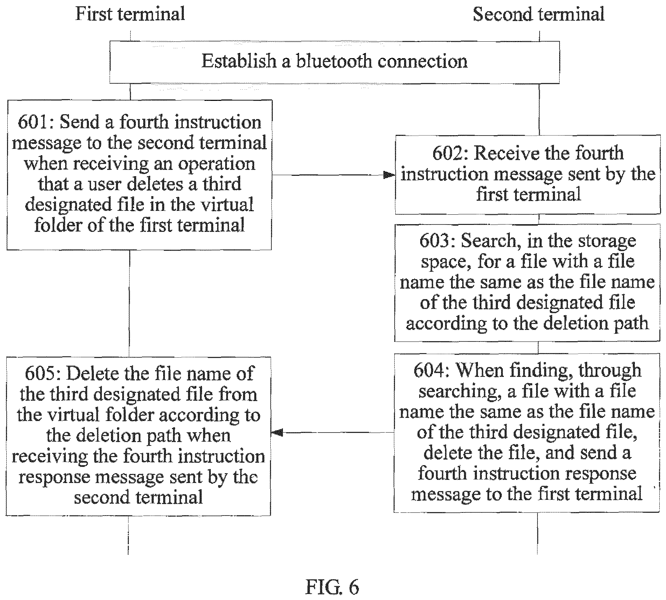

In a third implementation manner of the embodiment of the present invention, a method for expanding a storage space is provided. As shown in FIG. 6, after the first terminal maps the information in the storage space of the second terminal to the virtual folder, the method further includes the following steps:
601: The first terminal sends a fourth instruction message to the second terminal when receiving an operation that a user deletes a third designated file in the virtual folder of the first terminal, where the fourth instruction message carries an instruction of deleting the third designated file in the storage space of the second terminal and a deletion path of the third designated file, and the deletion path of the third designated file includes a file name of the third designated file.

When the user intends to delete a file in the virtual folder, for example, intends to delete a file one.txt in a folder shm in a SD card, the first terminal sends the fourth instruction message to the second terminal when the first terminal receives a deletion operation of the user. As long as it is ensured that a defined fourth instruction message can be distinguished from a general bluetooth transmission file, a format of the fourth instruction message may be defined randomly, and the fourth instruction message is parsable to the first terminal and the second terminal. For example, the fourth instruction message is encapsulated in a form of .txt file for transmission, and a file name is handset B to handset A.txt. The second terminal obtains specific operation content by parsing the received fourth instruction message. The fourth instruction message is indicated by utilizing hexadecimal, and the format is shown in the following:
00 01 02 03 02 A6 16 18 73 64 63 61 72 64 2F 73 68 6D 2F 6F 6E 65 2E 74 78 74 0D 0A, where "00 01 02 03 02 A6" is a prefix of the fourth instruction message, "16" indicates a key word corresponding to the fourth instruction message, and is used to indicate that the first terminal is to delete the third designated file in the storage space of the second terminal, "18" is used to indicate that the number of effective bytes of the deletion path of the third designated file is 18, an 18-byte ASCII code after "18" indicates the file name of the file, "73 64 63 61 72 64 2F 73 68 6D 2F 6F 6E 65 2E 74 78 74" indicates that the deletion path of the third designated file is sdcard/shm/one.txt, where the last one.txt is the file name of the third designated file, and "0D 0A" is a suffix of the fourth instruction message, and indicates that the instruction message is ended.

602: The second terminal receives the fourth instruction message sent by the first terminal, where the fourth instruction message carries the instruction of deleting a third designated file in the storage space of the second terminal and the deletion path of the third designated file, and the deletion path of the third designated file includes the file name of the third designated file.

603: The second terminal searches, in the storage space, for a file with a file name the same as the file name of the third designated file according to the deletion path.

When receiving the fourth instruction message through bluetooth, the second terminal obtains, by parsing the fourth instruction message, that the first terminal is to delete the file one.txt in the folder shm in the SD card of the second terminal, and the second terminal searches, in the storage space, for the file with the file name of one.txt according to the deletion path sdcard/shm/one.txt.

604: When finding, through searching, a file with a file name the same as the file name of the third designated file, the second terminal deletes the file, and sends a fourth instruction response message to the first terminal, where the fourth instruction response message carries an instruction that file deletion is successful.

When finding, through searching, the third designated file with the file name of one.txt, the second terminal deletes the third designated file from the storage space of the second terminal, and sends the fourth instruction response message to the first terminal through bluetooth. As long as it is ensured that a defined fourth instruction response message can be distinguished from a general bluetooth transmission file, a format of the fourth instruction response message may be defined randomly, and the fourth instruction response message is parsable to the first terminal and the second terminal. For example, the fourth instruction response message is encapsulated in a form of .txt file for transmission. The file format is shown in the following:
00 01 02 03 02 A6 17 ff 0D 0A, where "00 01 02 03 02 A6" is a prefix of the fourth instruction response message, "17" indicates a key word corresponding to the fourth instruction response message, "ff" indicates that file deletion is successful, and "0D 0A" is a suffix of the fourth instruction response message, and indicates that the response message is ended.

605: The first terminal deletes the file name of the third designated file from the virtual folder according to the deletion path when the first terminal receives the fourth instruction response message sent by the second terminal, where the second instruction response message carries the instruction that file deletion is successful.

When the first terminal receives, through bluetooth, the fourth instruction response message carrying that file deletion is successful and sent by the second terminal, the first terminal deletes, in the virtual folder, the file name of the third designated file according to the deletion path, so that content stored in the storage space of the second terminal is consistent with content in the virtual folder.

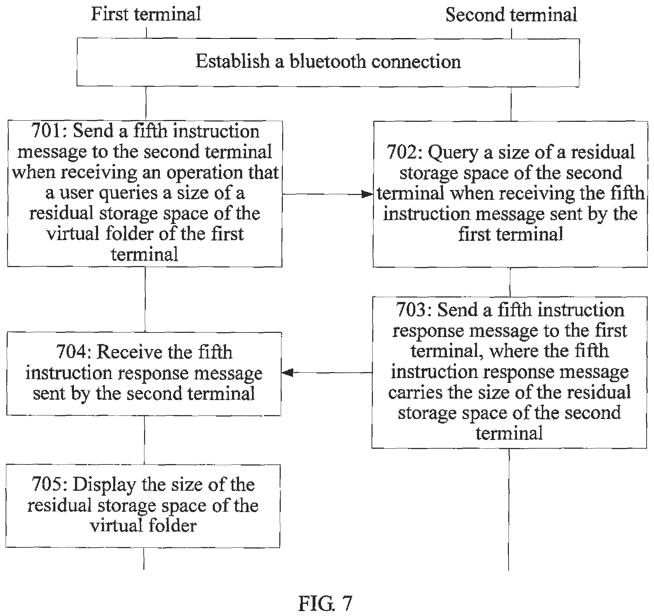

In a fourth implementation manner of the embodiment of the present invention, a method for expanding a storage space is provided. As shown in FIG. 7, after the first terminal maps the information in the storage space of the second terminal to the virtual folder, the method further includes the following steps:
701: The first terminal sends a fifth instruction message to the second terminal when receiving an operation that a user queries a size of a residual storage space of the virtual folder of the first terminal, where the fifth instruction message carries an instruction of querying a residual storage space of the second terminal.

When the user intends to query the size of the residual storage space of the virtual folder, namely, query a size of the residual storage space of the second terminal, the first terminal sends the fifth instruction message to the second terminal when the first terminal receives a querying operation of the user. As long as it is ensured that a defined fifth instruction message can be distinguished from a general bluetooth transmission file, a format of the fifth instruction message may be defined randomly, and the fifth instruction message is parsable to the first terminal and the second terminal. For example, the fifth instruction message is encapsulated in a form of .txt file for transmission, and a file name is handset B to handset A.txt. The second terminal obtains specific operation content by parsing the received fifth instruction message. The fifth instruction message may be indicated by utilizing hexadecimal, and the format is shown in the following:
00 01 02 03 02 A6 18 0D 0A, where "00 01 02 03 02 A6" is a prefix of the fifth instruction message, "18" indicates a key word corresponding to the fifth instruction message, and is used to indicate that the first terminal is to query the size of the residual storage space of the second terminal, and "0D 0A" is a suffix of the fifth instruction message, and indicates that the instruction message is ended.

702: The second terminal queries the size of the residual storage space of the second terminal when the second terminal receives the fifth instruction message sent by the first terminal, where the fifth instruction message carries the instruction of querying a residual storage space of the second terminal.

703: The second terminal sends a fifth instruction response message to the first terminal, where the fifth instruction response message carries the size of the residual storage space of the second terminal.

When receiving, through bluetooth, the fifth instruction message carrying a query for the residual storage space of the second terminal, the second terminal queries the size of the residual storage space, and sends the size to the first terminal through bluetooth. As long as it is ensured that a defined fifth instruction response message can be distinguished from a general bluetooth transmission file, a format of the sent fifth instruction response message may be defined randomly, and the fifth instruction response message is parsable to the first terminal and the second terminal. For example, the fifth instruction response message is encapsulated in a form of .txt file for transmission, and the file format is shown in the following:
00 01 02 03 02 A6 19 04 00 00 04 00 0D 0A, where "00 01 02 03 02 A6" is a prefix of the fifth instruction response message, "19" indicates a key word corresponding to the fifth instruction response message, "04" is used to indicate that the number of effective bytes of the size of the residual storage space of the second terminal is 4, namely, "00 00 04 00" after " 04" indicates the size of the residual storage space of the second terminal, whose unit is kByte, where "04 00" indicates that the size of the residual storage space of the second terminal is 1kByte, and "0D 0A" is a suffix of the fifth instruction response message, and indicates that the response message is ended.

704: The first terminal receives the fifth instruction response message sent by the second terminal, where the fifth instruction response message carries the size of the residual storage space of the second terminal.

705: The first terminal displays the size of the residual storage space of the virtual folder, where the size of the residual storage space of the virtual folder is equal to the size of the residual storage space of the second terminal.

The first terminal receives, through bluetooth, the fifth instruction response message carrying the size of the residual storage space of the second terminal. The received size of the residual storage space of the second terminal is the size of the residual storage space of the virtual folder, and the size of the residual storage space of the virtual folder is displayed.

In the foregoing embodiment, a storage space of a second terminal is used as a virtual folder of a first terminal, which is similar to a drive of the first terminal, thereby expanding the storage space of the first terminal, the storage space of the second terminal is completely visible to the first terminal, and the first terminal may operate the storage space of the second terminal like operating the storage space of the first terminal itself.

### Embodiment 2

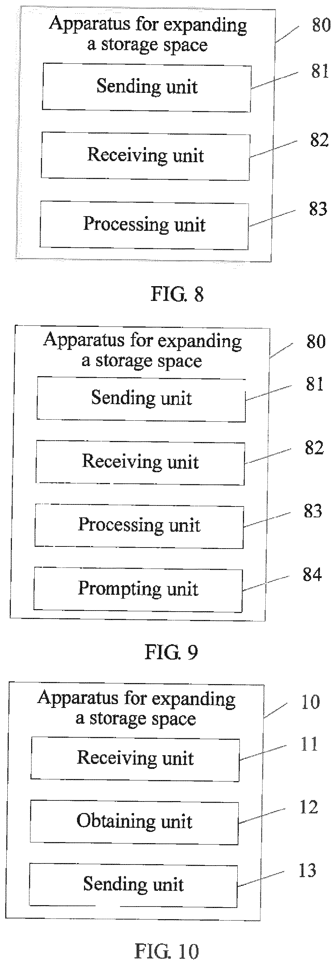

The embodiment of the present invention provides an apparatus 80 for expanding a storage space. As shown in FIG. 8, the apparatus 80 includes a sending unit 81, a receiving unit 82, and a processing unit 83.

The sending unit 81 is configured to send a first instruction message to a second terminal, where the first instruction message carries an instruction of obtaining information of a storage space of the second terminal.

The receiving unit 82 is configured to, after the sending unit sends the first instruction message to the second terminal, receive a first instruction response message sent by the second terminal, where the first instruction response message carries the information of the storage space of the second terminal.

The processing unit 83 is configured to set a virtual folder in a storage space of a first terminal, and store, in the virtual folder, the information of the storage space of the second terminal carried in the first instruction response message received by the receiving unit.

In the apparatus for expanding a storage space provided by the embodiment of the present invention, a first terminal sends a first instruction message to a second terminal, where the first instruction message carries an instruction of obtaining information of a storage space of the second terminal; and after receiving a first instruction response message sent by the second terminal, sets a virtual folder in a storage space of the first terminal, and stores, in the virtual folder, the information of the storage space of the second terminal carried in the first instruction response message. In the embodiment of the present invention, it is implemented that, under a precondition of not increasing a storage space of a first terminal, a storage space of a second terminal is used as a virtual disk of the first terminal, thereby increasing the storage space of the first terminal.

Optionally, the sending unit is further configured to, when the receiving unit receives an operation that a user stores a first designated file in the virtual folder of the first terminal, send a second instruction message to the second terminal, where the second instruction message carries an instruction of storing a file in the storage space of the second terminal, a designated storage path and a size of the to-be-stored first designated file; and when the receiving unit receives a confirmation instruction sent by the second terminal, send the first designated file to the second terminal, where the confirmation instruction indicates that the storage space of the second terminal is capable of storing the first designated file; and

the processing unit is further configured to, when the receiving unit receives a second instruction response message sent by the second terminal, store a file name of the first designated file in the virtual folder of the first terminal according to the designated storage path, where the second instruction response message carries an instruction that file storage is successful.

Optionally, as shown in FIG. 9, the apparatus further includes:
a prompting unit 84, configured to, when the receiving unit receives an error instruction sent by the second terminal, prompt that the first designated file cannot be stored in the virtual folder, where the error instruction indicates that a residual storage space of the second terminal is less than the size of the first designated file.

Optionally, the sending unit is further configured to, when the receiving unit receives an operation that a user invokes a second designated file in the virtual folder of the first terminal, send a third instruction message to the second terminal, where the third instruction message carries an instruction of invoking a file from the storage space of the second terminal and an invocation path of the second designated file, and the invocation path of the second designated file includes a file name of the second designated file;
the receiving unit is further configured to receive a third instruction response message and a duplicate of the second designated file that are sent by the second terminal, where the third instruction response message carries an instruction that file invocation is successful; and
the processing unit is further configured to store, in the storage space of the first terminal, the duplicate which is of the second designated file and is received by the receiving unit, so that the user performs a read/write operation on the duplicate of the second designated file.

Optionally, the sending unit is further configured to, when the receiving unit receives an operation that a user deletes a third designated file in the virtual folder of the first terminal, send a fourth instruction message to the second terminal, where the fourth instruction message carries an instruction of deleting the third designated file in the storage space of the second terminal and a deletion path of the third designated file, and the deletion path of the third designated file includes a file name of the third designated file; and
the processing unit is further configured to, when the receiving unit receives a fourth instruction response message sent by the second terminal, delete the file name of the third designated file from the virtual folder according to the deletion path, where the second instruction response message carries an instruction that file deletion is successful.

Optionally, the sending unit is further configured to, when the receiving unit receives an operation that a user queries a size of a residual storage space of the virtual folder of the first terminal, send a fifth instruction message to the second terminal, where the fifth instruction message carries an instruction of querying a residual storage space of the second terminal;
the receiving unit is further configured to receive a fifth instruction response message sent by the second terminal, where the fifth instruction response message carries a size of the residual storage space of the second terminal; and
the prompting unit is further configured to display the size of the residual storage space of the virtual folder according to the fifth instruction response message received by the receiving unit, where the size of the residual storage space of the virtual folder is equal to the size of the residual storage space of the second terminal.

The apparatus 80 is disposed in a client of the first terminal, or the apparatus is a client of the first terminal.

Correspondingly, the embodiment of the present invention further provides an apparatus 10 for expanding a storage space. As shown in FIG. 10, the apparatus 10 includes a receiving unit 11, an obtaining unit 12 and a sending unit 13.

The receiving unit 11 is configured to receive a first instruction message sent by a first terminal, where the first instruction message carries an instruction of obtaining information of a storage space of a second terminal;
the obtaining unit 12 is configured to, when the receiving unit receives the first instruction message sent by the first terminal, obtain the information of the storage space of the second terminal; and
the sending unit 13 is configured to send a first instruction response message to the first terminal according to the information of the storage space of the second terminal obtained by the obtaining unit, where the first instruction response message carries the information of the storage space of the second terminal.

In the apparatus for expanding a storage space provided by the embodiment of the present invention, when receiving a first instruction message sent by a first terminal, a second terminal obtains information of a storage space of the second terminal, and sends the information of the storage space of the second terminal to the first terminal through a first instruction response message. In the embodiment of the present invention, it is implemented that, under a precondition of not increasing a storage space of a first terminal, a storage space of a second terminal is used as a virtual disk of the first terminal, thereby increasing the storage space of the first terminal.

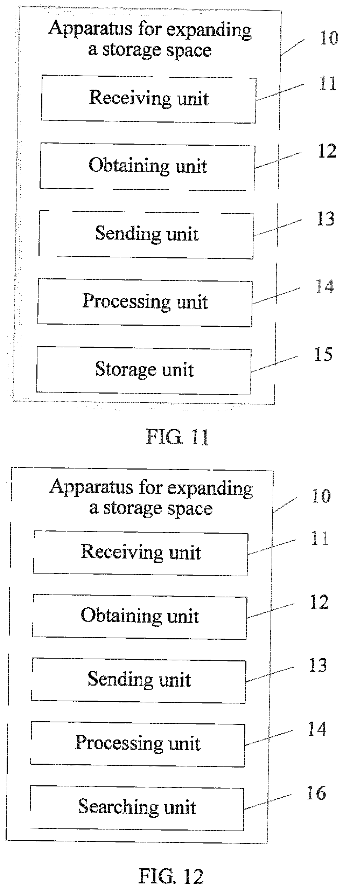

Optionally, as shown in FIG. 11, the apparatus further includes:
a processing unit 14, configured to, when the receiving unit receives a second instruction message sent by the first terminal, determine whether a size of a residual storage space of the second terminal is less than a size of a to-be-stored first designated file, where the second instruction message carries an instruction of storing a file in the storage space of the second terminal, a designated storage path and the size of the first designated file, where
the sending unit is further configured to, when the processing unit obtains that the size of the residual storage space of the second terminal is not less than the size of the first designated file, send a confirmation instruction to the first terminal, where the confirmation instruction indicates that the storage space of the second terminal is capable of storing the first designated file; and
a storage unit 15, configured to store, according to the designated storage path, in the storage space of the second terminal, the first designated file sent by the first terminal and received by the receiving unit, where
the sending unit is further configured to send a second instruction response message to the first terminal, where the second instruction response message carries an instruction that file storage is successful.

Optionally, the sending unit is further configured to, when the processing unit obtains that the size of the residual storage space of the second terminal is less than the size of the first designated file, send an error instruction to the first terminal, where the error instruction indicates that the residual storage space of the second terminal is less than the size of the first designated file.

Optionally, as shown in FIG. 12,
the receiving unit is further configured to receive a third instruction message sent by the first terminal, where the third instruction message carries an instruction of invoking a file from the storage space of the second terminal and an invocation path of a second designated file, and the invocation path of the second designated file includes a file name of the second designated file;
the apparatus further includes a searching unit 16, configured to search, by using the file name which is of the second designated file and is received by the receiving unit, in the storage space, for a file with a file name the same as the file name of the second designated file according to the invocation path;
the processing unit is further configured to, when the searching unit finds, through searching, a file with a file name the same as the file name of the second designated file, duplicate the second designated file, to obtain a duplicate of the second designated file; and
the sending unit is further configured to send a third instruction response message and the duplicate of the second designated file to the first terminal, where the third instruction response message carries an instruction that file invocation is successful.

Optionally, the receiving unit is further configured to receive a fourth instruction message sent by the first terminal, where the fourth instruction message carries an instruction of deleting a third designated file in the storage space of the second terminal and a deletion path of the third designated file, and the deletion path of the third designated file includes a file name of the third designated file;
the searching unit is further configured to, when the receiving unit receives the fourth instruction message, search, in the storage space, for a file with a file name the same as the file name of the third designated file according to the deletion path; and
the processing unit is further configured to, when the searching unit finds, through searching, a file with a file name the same as the file name of the third designated file, delete the file, and send a fourth instruction response message to the first terminal by using the sending unit, where the fourth instruction response message carries an instruction that file deletion is successful.

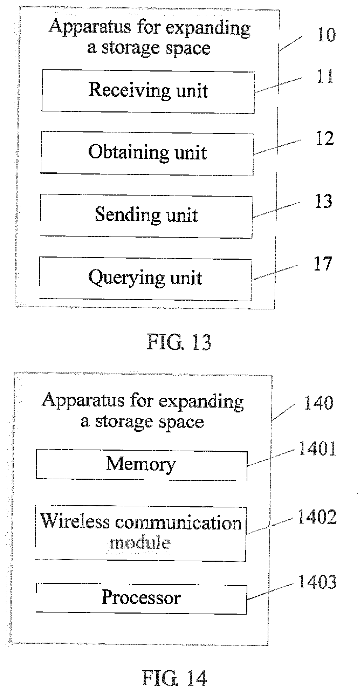

Optionally, as shown in FIG. 13, the apparatus 10 further includes: a querying unit 17, configured to, when the receiving unit receives a fifth instruction message sent by the first terminal, query a size of a residual storage space of the second terminal, where the fifth instruction message carries an instruction of querying the residual storage space of the second terminal, where
the sending unit is further configured to send, according to a result obtained, through querying, by the querying unit, a fifth instruction response message to the first terminal, where the fifth instruction response message carries the size of the residual storage space of the second terminal.

The apparatus 10 is disposed in a client of the second terminal, or the apparatus is a client of the second terminal.

For operation procedures of the apparatus 80 and the apparatus 10, reference is made to the foregoing processing procedure in the method for expanding a storage space.

### Embodiment 3

The embodiment of the present invention provides an apparatus for expanding a storage space. As shown in FIG. 14, an apparatus 140 includes a memory 1401, a wireless communication module 1402 and a processor 1403.

The memory 1401 is configured to store a software program and data.

The wireless communication module 1402 is configured to receive/send an instruction message and a file, and particularly send an instruction message or a file sent by a second terminal to the processor 1403 for processing; and additionally, send an instruction message processed by the processor 1403 to the second terminal.

Generally, the wireless communication module includes, but is not limited to, a bluetooth module and a WiFi module.

The processor 1403 is configured to execute the software program in the memory 1401, and specifically execute:
sending a first instruction message to the second terminal, where the first instruction message carries an instruction of obtaining information of a storage space of the second terminal;
receiving a first instruction response message sent by the second terminal, where the first instruction response message carries the information of the storage space of the second terminal; and
setting a virtual folder in a memory of a first terminal, and storing, in the virtual folder, the information of the storage space of the second terminal carried in the first instruction response message.

In the apparatus for expanding a storage space provided by the embodiment of the present invention, a first terminal sends a first instruction message to a second terminal, where the first instruction message carries an instruction of obtaining information of a storage space of the second terminal; and after receiving a first instruction response message sent by the second terminal, sets a virtual folder in a storage space of the first terminal, and stores, in the virtual folder, the information of the storage space of the second terminal carried in the first instruction response message. In the embodiment of the present invention, it is implemented that, under a precondition of not increasing a storage space of a first terminal, a storage space of a second terminal is used as a virtual disk of the first terminal, thereby increasing the storage space of the first terminal.

Optionally, the processor 1403 is further configured to execute:
sending a second instruction message to the second terminal when receiving an operation that a user stores a first designated file in the virtual folder of the first terminal, where the second instruction message carries an instruction of storing a file in the storage space of the second terminal, a designated storage path and a size of the to-be-stored first designated file;
sending the first designated file to the second terminal when receiving a confirmation instruction sent by the second terminal, where the confirmation instruction indicates that the storage space of the second terminal is capable of storing the first designated file; and
storing a file name of the first designated file in the virtual folder of the first terminal according to the designated storage path when receiving a second instruction response message sent by the second terminal, where the second instruction response message carries an instruction that file storage is successful.

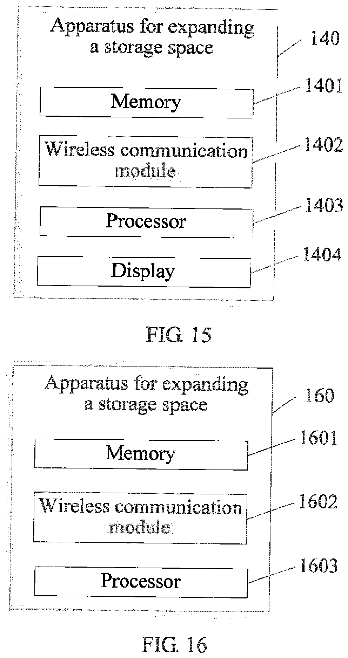

Optionally, as shown in FIG. 15, the apparatus 140 further includes a display 1404.

The processor 1403 is further configured to execute:
when receiving an error instruction sent by the second terminal, prompting that the first designated file cannot be stored in the virtual folder, where the error instruction indicates that a residual storage space of the second terminal is less than the size of the first designated file.

The display 1404 prompts that the first designated file cannot be stored in the virtual folder.

Optionally, in the apparatus 140, the processor 1403 is further configured to execute:
sending a third instruction message to the second terminal when receiving an operation that a user invokes a second designated file in the virtual folder of the first terminal, where the third instruction message carries an instruction of invoking a file from the storage space of the second terminal and an invocation path of the second designated file, and the invocation path of the second designated file includes a file name of the second designated file;
receiving a third instruction response message and a duplicate of the second designated file that are sent by the second terminal, where the third instruction response message carries an instruction that file invocation is successful; and
storing the duplicate of the second designated file in the storage space of the first terminal, so that the user performs a read/write operation on the duplicate of the second designated file.

Optionally, in the apparatus 140, the processor 1403 is further configured to execute:
sending a fourth instruction message to the second terminal when receiving an operation that a user deletes a third designated file in the virtual folder of the first terminal, where the fourth instruction message carries an instruction of deleting the third designated file in the storage space of the second terminal and a deletion path of the third designated file, and the deletion path of the third designated file includes a file name of the third designated file; and
deleting the file name of the third designated file from the virtual folder according to the deletion path when receiving a fourth instruction response message sent by the second terminal, where the fourth instruction response message carries an instruction that file deletion is successful.

Optionally, in the apparatus 140, the processor 1403 is further configured to execute:
sending a fifth instruction message to the second terminal when receiving an operation that a user queries a size of a residual storage space of the virtual folder of the first terminal, where the fifth instruction message carries an instruction of querying a residual storage space of the second terminal;
receiving a fifth instruction response message sent by the second terminal, where the fifth instruction response message carries a size of the residual storage space of the second terminal; and
displaying the size of the residual storage space of the virtual folder, where the size of the residual storage space of the virtual folder is equal to the size of the residual storage space of the second terminal.

The apparatus 140 is disposed in a client of the first terminal, or the apparatus is a client of the first terminal.

Correspondingly, as shown in FIG. 16, the embodiment of the present invention provides an apparatus 160 for expanding a storage space, where the apparatus 160 includes a memory 1601, a wireless communication module 1602 and a processor 1603.

The memory 1601 is configured to store a software program and data.

The wireless communication module 1602 is configured to receive/send an instruction message and a file, and particularly send an instruction message or a file sent by a first terminal to the processor 1603 for processing; and additionally, send an instruction message processed by the processor 1603 to the first terminal.

Generally, the wireless communication module includes, but is not limited to, a bluetooth module and a WiFi module .

The processor 1603 is configured to execute the software program in the memory 1601, and specifically execute:
obtaining information of a storage space of a second terminal when receiving a first instruction message sent by the first terminal, where the first instruction message carries an instruction of obtaining the information of the storage space of the second terminal; and
sending a first instruction response message to the first terminal, where the first instruction response message carries the information of the storage space of the second terminal.

In the apparatus for expanding a storage space provided by the embodiment of the present invention, when receiving a first instruction message sent by a first terminal, a second terminal obtains information of a storage space of the second terminal, and sends the information of the storage space of the second terminal to the first terminal through a first instruction response message. In the embodiment of the present invention, it is implemented that, under a precondition of not increasing a storage space of a first terminal, a storage space of a second terminal is used as a virtual disk of the first terminal, thereby increasing the storage space of the first terminal.

Optionally, in the apparatus 160, the processor 1603 is further configured to execute:
when receiving a second instruction message sent by the first terminal, determining whether a size of a residual storage space of the second terminal is less than a size of a to-be-stored first designated file, where the second instruction message carries an instruction of storing a file in the storage space of the second terminal, a designated storage path and the size of the first designated file;
sending a confirmation instruction to the first terminal when the size of the residual storage space of the second terminal is not less than the size of the first designated file, where the confirmation instruction indicates that the storage space of the second terminal is capable of storing the first designated file;
receiving the first designated file sent by the first terminal, and storing the first designated file in the storage space of the second terminal according to the designated storage path; and
sending a second instruction response message to the first terminal, where the second instruction response message carries an instruction that file storage is successful.

Optionally, in the apparatus 160, the processor 1603 is further configured to execute:
sending, by the second terminal, an error instruction to the first terminal when a size of a residual storage space of the memory 1601 is less than the size of the first designated file, where the error instruction indicates that the residual storage space of the memory 1601 is less than the size of the first designated file.

Optionally, in the apparatus 160, the processor 1603 is further configured to execute:
receiving a third instruction message sent by the first terminal, where the third instruction message carries an instruction of invoking a file from the storage space of the second terminal and an invocation path of the second designated file, and the invocation path of the second designated file includes a file name of the second designated file;
searching, in the storage space, for a file with a file name the same as the file name of the second designated file according to the invocation path;
when finding, through searching, a file with a file name the same as the file name of the second designated file, duplicating the second designated file, to obtain a duplicate of the second designated file; and
sending a third instruction response message and the duplicate of the second designated file to the first terminal, where the third instruction response message carries an instruction that file invocation is successful.

Optionally, in the apparatus 160, the processor 1603 is further configured to execute:
receiving a fourth instruction message sent by the first terminal, where the fourth instruction message carries an instruction of deleting a third designated file in the storage space of the second terminal and a deletion path of the third designated file, and the deletion path of the third designated file includes a file name of the third designated file;
searching, in the storage space, for a file with a file name the same as the file name of the third designated file according to the deletion path; and
when finding, through searching, a file with a file name the same as the file name of the third designated file, deleting the file, and sending a fourth instruction response message to the first terminal, where the fourth instruction response message carries an instruction that file deletion is successful.

Optionally, in the apparatus 160, the processor 1603 is further configured to execute:
querying a size of a residual storage space of the memory 1601 when receiving a fifth instruction message sent by the first terminal, where the fifth instruction message carries an instruction of querying the residual storage space of the memory 1601; and
sending a fifth instruction response message to the first terminal, where the fifth instruction response message carries the size of the residual storage space of the memory 1601.

The apparatus 160 is disposed in a client of the second terminal, or the apparatus is a client of the second terminal.

For operation procedures of the apparatus 140 and the apparatus 160, reference is made to the foregoing processing procedure in the method for expanding a storage space.

Through the foregoing description of the implementation manners, persons skilled in the art may be clearly understand that the present invention may be accomplished in a manner of software plus necessary universal hardware, and certainly, may also be accomplished by hardware, but in most cases, the former is a preferred implementation manner. Based on such understanding, the technical solutions of the present invention or the part that makes contributions to the prior art may be substantially embodied in a form of a software product. The computer software product is stored in a readable storage medium, for example, a floppy disk, a hard disk, or an optical disk of a computer, and includes several instructions used to enable a computer device (which may be a personal computer, a server, or a network device, or the like) to perform the methods according to the embodiments of the present invention.

The foregoing description is merely specific implementation manners of the present invention, but is not intended to limit the protection scope of the present invention. The protection scope of the present invention is subject to the protection scope of the appended claims.

## Claims

1. A method for expanding a storage space, comprising:
sending (101), by a first terminal, via a link, a first instruction message to a second terminal, wherein the first instruction message carries an instruction of obtaining information of a storage space of the second terminal;
receiving (102), by the first terminal, a first instruction response message sent by the second terminal via the link, wherein the first instruction response message carries the information of the storage space of the second terminal;
setting (103), by the first terminal, a virtual folder in a storage space of the first terminal, and storing, in the virtual folder, the information of the storage space of the second terminal carried in the first instruction response message;
the method being **characterized by**
sending (301), by the first terminal, via the link, the link being a Bluetooth link, a second instruction message to the second terminal when receiving an operation that a user stores a first designated file in the virtual folder of the first terminal, wherein the second instruction message carries an instruction of storing a file in the storage space of the second terminal, a designated storage path and a size of the to-be-stored first designated file;
sending (304), by the first terminal, via the Bluetooth link, the first designated file to the second terminal when the first terminal receives a confirmation instruction sent by the second terminal, wherein the confirmation instruction indicates that the storage space of the second terminal is capable of storing the first designated file; and
storing (307), by the first terminal, a file name of the first designated file in the virtual folder of the first terminal according to the designated storage path when the first terminal receives a second instruction response message sent by the second terminal, wherein the second instruction response message carries an instruction that file storage is successful.

2. The method according to claim 1, wherein after the sending (301), by the first terminal, a second instruction message to the second terminal when receiving an operation that a user stores a first designated file in the virtual folder of the first terminal, the method further comprises:
when the first terminal receives an error instruction sent by the second terminal, prompting (309), by the first terminal, that the first designated file cannot be stored in the virtual folder, wherein the error instruction indicates that a residual storage space of the second terminal is less than the size of the first designated file.

3. The method according to claim 1, further comprising:
sending (501), by the first terminal, a third instruction message to the second terminal when receiving an operation that a user invokes a second designated file in the virtual folder of the first terminal, wherein the third instruction message carries an instruction of invoking a file from the storage space of the second terminal and an invocation path of the second designated file, and the invocation path of the second designated file comprises a file name of the second designated file;
receiving (506), by the first terminal, a third instruction response message and a duplicate of the second designated file that are sent by the second terminal, wherein the third instruction response message carries an instruction that file invocation is successful; and
storing (507), by the first terminal, the duplicate of the second designated file in the storage space of the first terminal, so that the user performs a read/write operation on the duplicate of the second designated file.

4. The method according to claim 1, further comprising:
sending (601), by the first terminal, a fourth instruction message to the second terminal when receiving an operation that a user deletes a third designated file in the virtual folder of the first terminal, wherein the fourth instruction message carries an instruction of deleting the third designated file in the storage space of the second terminal and a deletion path of the third designated file, and the deletion path of the third designated file comprises a file name of the third designated file; and
deleting (605), by the first terminal, the file name of the third designated file from the virtual folder according to the deletion path when the first terminal receives a fourth instruction response message sent by the second terminal, wherein the fourth instruction response message carries an instruction that file deletion is successful.

5. The method according to claim 1, further comprising:
sending (701), by the first terminal, a fifth instruction message to the second terminal when receiving an operation that a user queries a size of a residual storage space of the virtual folder of the first terminal, wherein the fifth instruction message carries an instruction of querying a residual storage space of the second terminal;
receiving (704), by the first terminal, a fifth instruction response message sent by the second terminal, wherein the fifth instruction response message carries a size of the residual storage space of the second terminal; and
displaying (705), by the first terminal, the size of the residual storage space of the virtual folder, wherein the size of the residual storage space of the virtual folder is equal to the size of the residual storage space of the second terminal.

6. A method for expanding a storage space, comprising:
obtaining (201) information of a storage space of a second terminal when the second terminal receives a first instruction message sent by a first terminal via a link, wherein the first instruction message carries an instruction of obtaining the information of the storage space of the second terminal;
sending (202), by the second terminal, via the link, a first instruction response message to the first terminal, wherein the first instruction response message carries the information of the storage space of the second terminal;
the method being **characterized by**
when the second terminal receives a second instruction message sent by the first terminal via the link, the link being a Bluetooth link, determining (302), by the second terminal, whether a size of a residual storage space of the second terminal is less than a size of a to-be-stored first designated file, wherein the second instruction message carries an instruction of storing a file in the storage space of the second terminal, a designated storage path and a size of the first designated file;
sending (303), by the second terminal, via the Bluetooth link, a confirmation instruction to the first terminal when the size of the residual storage space of the second terminal is not less than the size of the first designated file, wherein the confirmation instruction indicates that the storage space of the second terminal is capable of storing the first designated file;
receiving (305), by the second terminal, via the Bluetooth link, the first designated file sent by the first terminal, and storing the first designated file in the storage space of the second terminal according to the designated storage path; and
sending (306), by the second terminal, via the Bluetooth link, a second instruction response message to the first terminal, wherein the second instruction response message carries an instruction that file storage is successful.

7. The method according to claim 6, further comprising:
sending (308), by the second terminal, an error instruction to the first terminal when the size of the residual storage space of the second terminal is less than the size of the first designated file, wherein the error instruction indicates that the residual storage space of the second terminal is less than the size of the first designated file.

8. The method according to claim 6, further comprising:
receiving (502), by the second terminal, a third instruction message sent by the first terminal, wherein the third instruction message carries an instruction of invoking a file from the storage space of the second terminal and an invocation path of a second designated file, and the invocation path of the second designated file comprises a file name of the second designated file;
searching (503), by the second terminal, in the storage space, for a file with a file name the same as the file name of the second designated file according to the invocation path;
when finding (504), through searching, a file with a file name the same as the file name of the second designated file, duplicating, by the second terminal, the second designated file, to obtain a duplicate of the second designated file; and
sending (505), by the second terminal, a third instruction response message and the duplicate of the second designated file to the first terminal, wherein the third instruction response message carries an instruction that file invocation is successful.

9. The method according to claim 6, further comprising:
receiving (602), by the second terminal, a fourth instruction message sent by the first terminal, wherein the fourth instruction message carries an instruction of deleting a third designated file in the storage space of the second terminal and a deletion path of the third designated file, and the deletion path of the third designated file comprises a file name of the third designated file;
searching (603), by the second terminal, in the storage space, for a file with a file name the same as the file name of the third designated file according to the deletion path; and
when finding (604), through searching, a file with a file name the same as the file name of the third designated file, deleting, by the second terminal, the file, and sending a fourth instruction response message to the first terminal, wherein the fourth instruction response message carries an instruction that file deletion is successful.

10. The method according to claim 6, further comprising:
querying (702), by the second terminal, a size of a residual storage space of the second terminal when the second terminal receives a fifth instruction message sent by the first terminal, wherein the fifth instruction message carries an instruction of querying the residual storage space of the second terminal; and
sending (703), by the second terminal, a fifth instruction response message to the first terminal, wherein the fifth instruction response message carries the size of the residual storage space of the second terminal.

11. An apparatus (80) for expanding a storage space, comprising:
a sending unit (81), configured to send a first instruction message to a second terminal via a link, wherein the first instruction message carries an instruction of obtaining information of a storage space of the second terminal;
a receiving unit (82), configured to after the sending unit sends the first instruction message to the second terminal, receive a first instruction response message sent by the second terminal via the link, wherein the first instruction response message carries the information of the storage space of the second terminal;
a processing unit (83), configured to set a virtual folder in a storage space of the first terminal, and store, in the virtual folder, the information of the storage space of the second terminal carried in the first instruction response message received by the receiving unit;
the apparatus (80) being **characterized in that**
the sending unit (81) is further configured to, when the receiving unit receives an operation that a user stores a first designated file in the virtual folder of the first terminal, send a second instruction message to the second terminal, via the link, the link being a Bluetooth link, wherein the second instruction message carries an instruction of storing a file in the storage space of the second terminal, a designated storage path and a size of the to-be-stored first designated file; and when the receiving unit receives a confirmation instruction sent by the second terminal, via the Bluetooth link, send the first designated file to the second terminal, via the Bluetooth link, wherein the confirmation instruction indicates that the storage space of the second terminal is capable of storing the first designated file; and
the processing unit (83) is further configured to, when the receiving unit receives a second instruction response message sent by the second terminal, via the Bluetooth link, store a file name of the first designated file in the virtual folder of the first terminal according to the designated storage path, wherein the second instruction response message carries an instruction that file storage is successful.

12. An apparatus (10) for expanding a storage space, comprising:
a receiving unit (11), configured to receive a first instruction message sent by a first terminal via a link, wherein the first instruction message carries an instruction of obtaining information of a storage space of a second terminal;
an obtaining unit (12), configured to, when the receiving unit receives the first instruction message sent by the first terminal, obtain the information of the storage space of the second terminal;
a sending unit (13), configured to send a first instruction response message to the first terminal according to the information of the storage space of the second terminal obtained by the obtaining unit via the link, wherein the first instruction response message carries the information of the storage space of the second terminal;
the apparatus (10) being **characterized by**
a processing unit (14), configured to determine, when the receiving unit (11) receives a second instruction message sent by the first terminal via the link, the link being a Bluetooth link, whether a size of a residual storage space of the second terminal is less than a size of a to-be-stored first designated file, where the second instruction message carries an instruction of storing a file in the storage space of the second terminal, a designated storage path and the size of the first designated file, where the sending unit (13) is further configured to, when the processing unit (14) obtains that the size of the residual storage space of the second terminal is not less than the size of the first designated file, send a confirmation instruction to the first terminal via the Bluetooth link, where the confirmation instruction indicates that the storage space of the second terminal is capable of storing the first designated file; and
a storage unit (15), store, according to the designated storage path, in the storage space of the second terminal, the first designated file sent by the first terminal and received by the receiving unit (11), where
the sending unit (13) is further configured to send the second instruction response message to the first terminal via the Bluetooth link, where the second instruction response message carries an instruction that file storage is successful.

## Patentansprüche

1. Verfahren zum Erweitern eines Speicherplatzes, umfassend:
Senden (101), durch ein erstes Endgerät, über eine Verbindung, einer ersten Anweisungsnachricht an ein zweites Endgerät, wobei die erste Anweisungsnachricht eine Anweisung zum Erlangen von Informationen zu einem Speicherplatz des zweiten Endgerätes trägt;
Empfangen (102), durch das erste Endgerät, einer durch das zweite Endgerät über die Verbindung gesendeten ersten Anweisungsantwortnachricht, wobei die erste Anweisungsantwortnachricht die Informationen zum Speicherplatz des zweiten Endgerätes trägt;
Einstellen (103), durch das erste Endgerät, eines virtuellen Ordners in einem Speicherplatz des ersten Endgerätes und Speichern der in der ersten Anweisungsantwortnachricht getragenen Informationen zum Speicherplatz des zweiten Endgerätes in dem virtuellen Ordner;
wobei das Verfahren **gekennzeichnet ist durch** Senden (301), durch das erste Endgerät, über die Verbindung, wobei es sich bei der Verbindung um eine Bluetooth-Verbindung handelt, einer zweiten Anweisungsnachricht an das zweite Endgerät, wenn ein Vorgang empfangen wird, dass ein Benutzer eine erste designierte Datei in dem virtuellen Ordner des ersten Endgerätes speichert, wobei die zweite Anweisungsnachricht eine Anweisung zum Speichern einer Datei in dem Speicherplatz des zweiten Endgerätes, einen designierten Speicherpfad und eine Größe der zu speichernden ersten designierten Datei trägt;
Senden (304), durch das erste Endgerät, über die Bluetooth-Verbindung, der ersten designierten Datei an das zweite Endgerät, wenn das erste Endgerät eine durch das zweite Endgerät gesendete Bestätigungsanweisung empfängt, wobei die Bestätigungsanweisung angibt, dass der Speicherplatz des zweiten Endgerätes zum Speichern der ersten designierten Datei in der Lage ist; und
Speichern (307), durch das erste Endgerät, eines Dateinamens der ersten designierten Datei in dem virtuellen Ordner des ersten Endgerätes gemäß dem designierten Speicherpfad, wenn das erste Endgerät eine durch das zweite Endgerät gesendete zweite Anweisungsantwortnachricht empfängt, wobei die zweite Anweisungsantwortnachricht eine Anweisung trägt, dass die Dateispeicherung erfolgreich war.

2. Verfahren nach Anspruch 1, wobei nach dem Senden (301), durch das erste Endgerät, einer zweiten Anweisungsnachricht and das zweite Endgerät beim Empfang eines Vorgangs, dass ein Benutzer eine erste designierte Datei in dem virtuellen Ordner des ersten Endgerätes speichert, das Verfahren ferner Folgendes umfasst:
wenn das erste Endgerät eine durch das zweite Endgerät gesendete Fehleranweisung empfängt, Veranlassen (309), durch das erste Endgerät, dass die erste designierte Datei nicht in dem virtuellen Ordner gespeichert werden kann, wobei die Fehleranweisung angibt, dass ein Restspeicherplatz des zweiten Endgerätes kleiner ist als die Größe der ersten designierten Datei.

3. Verfahren nach Anspruch 1, ferner umfassend:
Senden (501), durch das erste Endgerät, einer dritten Anweisungsnachricht an das zweite Endgerät, wenn ein Vorgang empfangen wird, dass ein Benutzer eine zweite designierte Datei in dem virtuellen Ordner des ersten Endgerätes aufruft, wobei die dritte Anweisungsnachricht eine Anweisung zum Aufrufen einer Datei aus dem Speicherplatz des zweiten Endgerätes und einen Aufrufpfad der zweiten designierten Datei trägt, und wobei der Aufrufpfad der zweiten designierten Datei einen Dateinamen der zweiten designierten Datei umfasst;
Empfangen (506), durch das erste Endgerät, einer dritten Anweisungsantwortnachricht und eines Duplikats der zweiten designierten Datei, die durch das zweite Endgerät gesendet werden, wobei die dritte Anweisungsantwortnachricht eine Anweisung trägt, dass der Dateiaufruf erfolgreich war; und
Speichern (507), durch das erste Endgerät, des Duplikats der zweiten designierten Datei in dem Speicherplatz des ersten Endgerätes, sodass der Benutzer einen Schreib-/Lesevorgang an dem Duplikat der zweiten designierten Datei durchführt.

4. Verfahren nach Anspruch 1, ferner umfassend:
Senden (601), durch das erste Endgerät, einer vierten Anweisungsnachricht an das zweite Endgerät, wenn ein Vorgang empfangen wird, dass ein Benutzer eine dritte designierte Datei in dem virtuellen Ordner des ersten Endgerätes löscht, wobei die vierte Anweisungsnachricht eine Anweisung zum Löschen der dritten designierten Datei in dem Speicherplatz des zweiten Endgerätes und einen Löschpfad der dritten designierten Datei trägt, und wobei der Löschpfad der dritten designierten Datei einen Dateinamen der dritten designierten Datei umfasst; und
Löschen (605), durch das erste Endgerät, des Dateinamens der dritten designierten Datei aus dem virtuellen Ordner gemäß dem Löschpfad, wenn das erste Endgerät eine durch das zweite Endgerät gesendete vierte Anweisungsantwortnachricht empfängt, wobei die vierte Anweisungsantwortnachricht eine Anweisung trägt, dass die Dateilöschung erfolgreich war.

5. Verfahren nach Anspruch 1, ferner umfassend:
Senden (701), durch das erste Endgerät, einer fünften Anweisungsnachricht an das zweite Endgerät, wenn ein Vorgang empfangen wird, dass ein Benutzer eine Größe eines Restspeicherplatzes des virtuellen Ordners des ersten Endgerätes abfragt, wobei die fünfte Anweisungsnachricht eine Anweisung zum Abfragen eines Restspeicherplatzes des zweiten Endgerätes trägt;
Empfangen (704), durch das erste Endgerät, einer durch das zweite Endgerät gesendeten fünften Anweisungsantwortnachricht, wobei die fünfte Anweisungsantwortnachricht eine Größe des Restspeicherplatzes des zweiten Endgerätes trägt; und
Anzeigen (705), durch das erste Endgerät, der Größe des Restspeicherplatzes des virtuellen Ordners, wobei die Größe des Restspeicherplatzes des virtuellen Ordners gleich der Größe des Restspeicherplatzes des zweiten Endgerätes ist.

6. Verfahren zum Erweitern eines Speicherplatzes, umfassend:
Erlangen (201) von Informationen zu einem Speicherplatz eines zweiten Endgerätes, wenn das zweite Endgerät eine durch das erste Endgerät über eine Verbindung gesendete erste Anweisungsnachricht empfängt, wobei die erste Anweisungsnachricht eine Anweisung zum Erlangen der Informationen zum Speicherplatz des zweiten Endgerätes trägt;
Senden (202), durch das zweite Endgerät, über die Verbindung, einer ersten Anweisungsantwortnachricht an das erste Endgerät, wobei die erste Anweisungsantwortnachricht die Informationen zum Speicherplatz des zweiten Endgerätes trägt;
wobei das Verfahren **gekennzeichnet ist durch**
wenn das zweite Endgerät eine durch das erste Endgerät über die Verbindung gesendete zweite Anweisungsnachricht empfängt, wobei es sich bei der Verbindung um eine Bluetooth-Verbindung handelt, Bestimmen (302), durch das zweite Endgerät, ob eine Größe des Restspeicherplatzes des zweiten Endgerätes kleiner ist als eine Größe einer zu speichernden ersten designierten Datei, wobei die zweite Anweisungsnachricht eine Anweisung zum Speichern einer Datei in dem Speicherplatz des zweiten Endgerätes, einen designierten Speicherpfad und eine Größe der ersten designierten Datei trägt;
Senden (303), durch das zweite Endgerät, über die Bluetooth-Verbindung, einer Bestätigungsanweisung an das erste Endgerät, wenn die Größe des Restspeicherplatzes des zweiten Endgerätes nicht kleiner ist als die Größe der ersten designierten Datei, wobei die Bestätigungsanweisung angibt, dass der Speicherplatz des zweiten Endgerätes zum Speichern der ersten designierten Datei in der Lage ist;
Empfangen (305), durch das zweite Endgerät, über die Bluetooth-Verbindung, der durch das erste Endgerät gesendeten ersten designierten Datei und Speichern der ersten designierten Datei in dem Speicherplatz des zweiten Endgerätes gemäß dem designierten Speicherpfad; und
Senden (306), durch das zweite Endgerät, über die Bluetooth-Verbindung, einer zweiten Anweisungsantwortnachricht an das erste Endgerät, wobei die zweite Anweisungsantwortnachricht eine Anweisung trägt, dass die Dateispeicherung erfolgreich war.

7. Verfahren nach Anspruch 6, ferner umfassend:
Senden (308), durch das zweite Endgerät, einer Fehleranweisung an das erste Endgerät, wenn die Größe des Restspeicherplatzes des zweiten Endgerätes kleiner ist als die Größe der ersten designierten Datei, wobei die Fehleranweisung angibt, dass der Restspeicherplatz des zweiten Endgerätes kleiner ist als die Größe der ersten designierten Datei.

8. Verfahren nach Anspruch 6, ferner umfassend:
Empfangen (502), durch das zweite Endgerät, einer durch das erste Endgerät gesendeten dritten Anweisungsnachricht, wobei die dritte Anweisungsnachricht eine Anweisung zum Aufrufen einer Datei aus dem Speicherplatz des zweiten Endgerätes und einen Aufrufpfad einer zweiten designierten Datei trägt, und wobei der Aufrufpfad der zweiten designierten Datei einen Dateinamen der zweiten designierten Date umfasst;
Suchen (503), durch das zweite Endgerät, in dem Speicherplatz, nach einer Datei mit demselben Dateinamen wie der Dateiname der zweiten designierten Datei gemäß dem Aufrufpfad;
wenn durch das Suchen, eine Datei mit demselben Dateinamen wie der Dateiname der zweiten designierten Datei gefunden (504) wird, Duplizieren, durch das zweite Endgerät, der zweiten designierten Datei, um ein Duplikat der zweiten designierten Datei zu erlangen; und
Senden (505), durch das zweite Endgerät, einer dritten Anweisungsantwortnachricht und des Duplikats der zweiten designierten Datei an das erste Endgerät, wobei die dritte Anweisungsantwortnachricht eine Anweisung trägt, dass der Dateiaufruf erfolgreich war.

9. Verfahren nach Anspruch 6, ferner umfassend:
Empfangen (602), durch das zweite Endgerät, einer durch das erste Endgerät gesendeten vierten Anweisungsnachricht, wobei die vierte Anweisungsnachricht eine Anweisung zum Löschen einer dritten designierten Datei in dem Speicherplatz des zweiten Endgerätes und einen Löschpfad der dritten designierten Datei trägt, und wobei der Löschpfad der dritten designierten Datei einen Dateinamen der dritten designierten Datei umfasst;
Suchen (603), durch das zweite Endgerät, in dem Speicherplatz, nach einer Datei mit demselben Dateinamen wie der Dateiname der dritten designierten Datei gemäß dem Löschpfad; und
wenn durch das Suchen eine Datei mit demselben Dateinamen wie der Dateiname der dritten designierten Datei gefunden (604) wird, Löschen, durch das zweite Endgerät, der Datei und Senden einer vierten Anweisungsantwortnachricht an das erste Endgerät, wobei die vierte Anweisungsantwortnachricht eine Anweisung trägt, dass die Dateilöschung erfolgreich war.

10. Verfahren nach Anspruch 6, ferner umfassend:
Abrufen (702), durch das zweite Endgerät, einer Größe eines Restspeicherplatzes des zweiten Endgerätes, wenn das zweite Endgerät eine durch das erste Endgerät gesendete fünfte Anweisungsnachricht empfängt, wobei die fünfte Anweisungsnachricht eine Anweisung zum Abfragen des Restspeicherplatzes des zweiten Endgerätes trägt; und
Senden (703), durch das zweite Endgerät, einer fünften Anweisungsantwortnachricht an das erste Endgerät, wobei die fünfte Anweisungsantwortnachricht die Größe des Restspeicherplatzes des zweiten Endgerätes trägt.

11. Vorrichtung (80) zum Erweitern eines Speicherplatzes, umfassend:
eine Sendeeinheit (81), die dazu konfiguriert ist, eine erste Anweisungsnachricht an ein zweites Endgerät über eine Verbindung zu senden, wobei die erste Anweisungsnachricht eine Anweisung zum Erlangen von Informationen zu einem Speicherplatz des zweiten Endgerätes trägt;
eine Empfangseinheit (82), die dazu konfiguriert ist, nachdem die Sendeeinheit die erste Anweisungsnachricht an das zweite Endgerät gesendet hat, eine durch das zweite Endgerät über die Verbindung gesendete erste Anweisungsantwortnachricht zu empfangen, wobei die erste Anweisungsantwortnachricht die Informationen zum Speicherplatz des zweiten Endgerätes trägt;
eine Verarbeitungseinheit (83), die dazu konfiguriert ist, einen virtuellen Ordner in dem Speicherplatz des ersten Endgerätes einzustellen und in dem virtuellen Ordner die Informationen zum Speicherplatz des zweiten Endgerätes zu speichern, die in der durch die Empfangseinheit empfangenen ersten Anweisungsantwortnachricht getragen wurden;
wobei die Vorrichtung (80) **dadurch gekennzeichnet ist, dass** die Sendeeinheit (81) ferner dazu konfiguriert ist, wenn die Empfangseinheit einen Vorgang empfängt, dass ein Benutzer eine erste designierte Datei in dem virtuellen Ordner des ersten Endgerätes speichert, eine zweite Anweisungsnachricht an das zweite Endgerät über die Verbindung zu senden, wobei es sich bei der Verbindung um eine Bluetooth-Verbindung handelt, wobei die zweite Anweisungsnachricht eine Anweisung zum Speichern einer Datei in dem Speicherplatz des zweiten Endgerätes, einen designierten Speicherpfad und eine Größe der zu speichernden ersten designierten Datei trägt; und wenn die Empfangseinheit eine durch das zweite Endgerät über die Bluetooth-Verbindung gesendete Bestätigungsanweisung empfängt, die erste designierte Datei an das zweite Endgerät über die Bluetooth-Verbindung zu senden, wobei die Bestätigungsanweisung angibt, dass der Speicherplatz des zweiten Endgerätes zum Speichern der ersten designierten Datei in der Lage ist; und
die Verarbeitungseinheit (83) ferner dazu konfiguriert ist, wenn die Empfangseinheit eine durch das zweite Endgerät über die Bluetooth-Verbindung gesendete zweite Anweisungsantwortnachricht empfängt, einen Dateinamen der ersten designierten Datei in dem virtuellen Ordner des ersten Endgerätes gemäß dem designierten Speicherpfad zu speichern, wobei die zweite Anweisungsantwortnachricht eine Anweisung trägt, dass die Dateispeicherung erfolgreich war.

12. Vorrichtung (10) zum Erweitern eines Speicherplatzes, umfassend:
eine Empfangseinheit (11), die dazu konfiguriert ist, eine durch ein erstes Endgerät über eine Verbindung gesendete erste Anweisungsnachricht zu empfangen, wobei die erste Anweisungsnachricht eine Anweisung zum Erlangen von Informationen zu einem Speicherplatz eines zweiten Endgerätes trägt;
eine Erlangungseinheit (12), die dazu konfiguriert ist, wenn die Empfangseinheit die durch das erste Endgerät gesendete erste Anweisungsnachricht empfängt, die Informationen zum Speicherplatz des zweiten Endgerätes zu erlangen;
eine Sendeeinheit (13), die dazu konfiguriert ist, eine erste Anweisungsantwortnachricht an das erste Endgerät gemäß der Informationen zum Speicherplatz des zweiten Endgerätes, die durch die Erlangungseinheit über die Verbindung erlangt wurden, zu senden, wobei die erste Anweisungsantwortnachricht die Informationen zum Speicherplatz des zweiten Endgerätes trägt;
wobei die Vorrichtung (10) **gekennzeichnet ist durch** eine Verarbeitungseinheit (14), die dazu konfiguriert ist, wenn die Empfangseinheit (11) eine durch das erste Endgerät über die Verbindung gesendete zweite Anweisungsnachricht empfängt, wobei es sich bei der Verbindung um eine Bluetooth-Verbindung handelt, zu bestimmen, ob eine Größe eines Restspeicherplatzes des zweiten Endgerätes kleiner ist als eine Größe einer zu speichernden ersten designierten Datei, wobei die zweite Anweisungsnachricht eine Anweisung zum Speichern einer Datei in dem Speicherplatz des zweiten Endgerätes, einen designierten Speicherpfad und die Größe der ersten designierten Datei trägt, wobei
die Sendeeinheit (13) ferner dazu konfiguriert ist, wenn die Verarbeitungseinheit (14) erlangt, dass die Größe des Restspeicherplatzes des zweiten Endgerätes nicht kleiner ist als die Größe der ersten designierten Datei, eine Bestätigungsanweisung über die Bluetooth-Verbindung an das erste Endgerät zu senden, wobei die Bestätigungsanweisung angibt, dass der Speicherplatz des zweiten Endgerätes zum Speichern der ersten designierten Datei in der Lage ist; und
eine Speichereinheit (15), die gemäß dem designierten Speicherpfad die durch das erste Endgerät gesendete und durch die Empfangseinheit (11) empfangene erste designierte Datei speichert, wobei
die Sendeeinheit (13) ferner dazu konfiguriert ist, die zweite Anweisungsantwortnachricht an das erste Endgerät über die Bluetooth-Verbindung zu senden, wobei die zweite Anweisungsantwortnachricht eine Anweisung trägt, dass die Dateispeicherung erfolgreich war.

## Revendications

1. Procédé pour accroître un espace de stockage, comprenant :
l'envoi (101), par un premier terminal, par l'intermédiaire d'une liaison, d'un premier message d'instruction à un second terminal, dans lequel le premier message d'instruction contient une instruction d'acquérir des informations d'un espace de stockage du second terminal ;
la réception (102), par le premier terminal, d'un premier message de réponse d'instruction envoyé par le second terminal par l'intermédiaire de la liaison, dans lequel le premier message de réponse d'instruction contient les informations de l'espace de stockage du second terminal ;
la définition (103), par le premier terminal, d'un dossier virtuel dans un espace de stockage du premier terminal, et le stockage, dans le dossier virtuel, des informations de l'espace de stockage du second terminal contenues dans le premier message de réponse d'instruction ;
le procédé étant **caractérisé par**
l'envoi (301), par le premier terminal, par l'intermédiaire de la liaison, la liaison étant une liaison Bluetooth, d'un deuxième message d'instruction au second terminal lors de la réception d'une opération dans laquelle un utilisateur stocke un premier fichier désigné dans le dossier virtuel du premier terminal, dans lequel le deuxième message d'instruction contient une instruction de stocker un fichier dans l'espace de stockage du second terminal, un chemin de stockage désigné et une taille du premier fichier désigné à stocker ;
l'envoi (304), par le premier terminal, par l'intermédiaire de la liaison Bluetooth, du premier fichier désigné au second terminal lorsque le premier terminal reçoit une instruction de confirmation envoyée par le second terminal, dans lequel l'instruction de confirmation indique que l'espace de stockage du second terminal est apte à stocker le premier fichier désigné ; et
le stockage (307), par le premier terminal, d'un nom de fichier du premier fichier désigné dans le dossier virtuel du premier terminal selon le chemin de stockage désigné lorsque le premier terminal reçoit un deuxième message de réponse d'instruction envoyé par le second terminal, dans lequel le deuxième message de réponse d'instruction contient une instruction que le stockage du fichier est réussi.

2. Procédé selon la revendication 1, dans lequel après l'envoi (301), par le premier terminal, d'un deuxième message d'instruction au second terminal lors de la réception d'une opération dans laquelle un utilisateur stocke un premier fichier désigné dans le dossier virtuel du premier terminal, le procédé comprend en outre :
lorsque le premier terminal reçoit une instruction d'erreur envoyée par le second terminal, l'invitation (309), par le premier terminal, que le premier fichier désigné ne puisse pas être stocké dans le dossier virtuel, dans lequel l'instruction d'erreur indique qu'un espace de stockage résiduel du second terminal est inférieur à la taille du premier fichier désigné.

3. Procédé selon la revendication 1, comprenant en outre :
l'envoi (501), par le premier terminal, d'un troisième message d'instruction au second terminal lors de la réception d'une opération dans laquelle un utilisateur appelle un deuxième fichier désigné dans le dossier virtuel du premier terminal, dans lequel le troisième message d'instruction contient une instruction d'appeler un fichier à partir de l'espace de stockage du second terminal et un chemin d'appel du deuxième fichier désigné, et le chemin d'appel du deuxième fichier désigné comprend un nom de fichier du deuxième fichier désigné ;
la réception (506), par le premier terminal, d'un troisième message de réponse d'instruction et d'une copie du deuxième fichier désigné qui sont envoyés par le second terminal, dans lequel le troisième message de réponse d'instruction contient une instruction que l'appel de fichier est réussi ; et
le stockage (507), par le premier terminal, de la copie du deuxième fichier désigné dans l'espace de stockage du premier terminal, de sorte que l'utilisateur réalise une opération de lecture/écriture sur la copie du deuxième fichier désigné.

4. Procédé selon la revendication 1, comprenant en outre :
l'envoi (601), par le premier terminal, d'un quatrième message d'instruction au second terminal lors de la réception d'une opération dans laquelle un utilisateur supprime un troisième fichier désigné dans le dossier virtuel du premier terminal, dans lequel le quatrième message d'instruction contient une instruction de supprimer le troisième fichier désigné dans l'espace de stockage du second terminal et un chemin de suppression du troisième fichier désigné, et le chemin de suppression du troisième fichier désigné comprend un nom de fichier du troisième fichier désigné ; et
la suppression (605), par le premier terminal, du nom de fichier du troisième fichier désigné du dossier virtuel selon le chemin de suppression lorsque le premier terminal reçoit un quatrième message de réponse d'instruction envoyé par le second terminal, dans lequel le quatrième message de réponse d'instruction contient une instruction que la suppression du fichier est réussie.

5. Procédé selon la revendication 1, comprenant en outre :
l'envoi (701), par le premier terminal, d'un cinquième message d'instruction au second terminal lors de la réception d'une opération dans laquelle un utilisateur interroge sur une taille d'un espace de stockage résiduel du dossier virtuel du premier terminal, dans lequel le cinquième message d'instruction contient une instruction d'interroger sur un espace de stockage résiduel du second terminal ;
la réception (704), par le premier terminal, d'un cinquième message de réponse d'instruction envoyé par le second terminal, dans lequel le cinquième message de réponse d'instruction contient une taille de l'espace de stockage résiduel du second terminal ; et
l'affichage (705), par le premier terminal, de la taille de l'espace de stockage résiduel du dossier virtuel, dans lequel la taille de l'espace de stockage résiduel du dossier virtuel est égale à la taille de l'espace de stockage résiduel du second terminal.

6. Procédé pour accroître un espace de stockage, comprenant :
l'acquisition (201) d'informations d'un espace de stockage d'un second terminal lorsque le second terminal reçoit un premier message d'instruction envoyé par un premier terminal par l'intermédiaire d'une liaison, dans lequel le premier message d'instruction contient une instruction d'acquérir les informations de l'espace de stockage du second terminal ;
l'envoi (202), par le second terminal, par l'intermédiaire de la liaison, d'un premier message de réponse d'instruction au premier terminal, dans lequel le premier message de réponse d'instruction contient les informations de l'espace de stockage du second terminal ;
le procédé étant **caractérisé par**
lorsque le second terminal reçoit un deuxième message d'instruction envoyé par le premier terminal par l'intermédiaire de la liaison, la liaison étant une liaison Bluetooth, le fait de déterminer (302), par le second terminal, si une taille d'un espace de stockage résiduel du second terminal est inférieure à une taille d'un premier fichier désigné à stocker, dans lequel le deuxième message d'instruction contient une instruction de stocker un fichier dans l'espace de stockage du second terminal, un chemin de stockage désigné et une taille du premier fichier désigné ;
l'envoi (303), par le second terminal, par l'intermédiaire de la liaison Bluetooth, d'une instruction de confirmation au premier terminal lorsque la taille de l'espace de stockage résiduel du second terminal n'est pas inférieure à la taille du premier fichier désigné, dans lequel l'instruction de confirmation indique que l'espace de stockage du second terminal est apte à stocker le premier fichier désigné ;
la réception (305), par le second terminal, par l'intermédiaire de la liaison Bluetooth, du premier fichier désigné envoyé par le premier terminal, et le stockage du premier fichier désigné dans l'espace de stockage du second terminal selon le chemin de stockage désigné ; et
l'envoi (306), par le second terminal, par l'intermédiaire de la liaison Bluetooth, d'un deuxième message de réponse d'instruction au premier terminal, dans lequel le deuxième message de réponse d'instruction contient une instruction que le stockage du fichier est réussi.

7. Procédé selon la revendication 6, comprenant en outre :
l'envoi (308), par le second terminal, d'une instruction d'erreur au premier terminal lorsque la taille de l'espace de stockage résiduel du second terminal est inférieure à la taille du premier fichier désigné, dans lequel l'instruction d'erreur indique que l'espace de stockage résiduel du second terminal est inférieur à la taille du premier fichier désigné.

8. Procédé selon la revendication 6, comprenant en outre :
la réception (502), par le second terminal, d'un troisième message d'instruction envoyé par le premier terminal, dans lequel le troisième message d'instruction contient une instruction d'appeler un fichier à partir de l'espace de stockage du second terminal et un chemin d'appel d'un deuxième fichier désigné, et le chemin d'appel du deuxième fichier désigné comprend un nom de fichier du deuxième fichier désigné ;
la recherche (503), par le second terminal, dans l'espace de stockage, d'un fichier ayant un nom de fichier identique au nom de fichier du deuxième fichier désigné selon le chemin d'appel ;
lorsqu'il est trouvé (504), au travers de la recherche, un fichier ayant un nom de fichier identique au nom de fichier du deuxième fichier désigné, la copie, par le second terminal, du deuxième fichier désigné, pour acquérir une copie du deuxième fichier désigné ; et
l'envoi (505), par le second terminal, d'un troisième message de réponse d'instruction et de la copie du deuxième fichier désigné au premier terminal, dans lequel le troisième message de réponse d'instruction contient une instruction que l'appel de fichier est réussi.

9. Procédé selon la revendication 6, comprenant en outre :
la réception (602), par le second terminal, d'un quatrième message d'instruction envoyé par le premier terminal, dans lequel le quatrième message d'instruction contient une instruction de supprimer un troisième fichier désigné dans l'espace de stockage du second terminal et un chemin de suppression du troisième fichier désigné, et le chemin de suppression du troisième fichier désigné comprend un nom de fichier du troisième fichier désigné ;
la recherche (603), par le second terminal, dans l'espace de stockage, d'un fichier ayant un nom de fichier identique au nom de fichier du troisième fichier désigné selon le chemin de suppression ; et
lorsqu'il est trouvé (604), au travers de la recherche, un fichier ayant un nom de fichier identique au nom de fichier du troisième fichier désigné, la suppression, par le second terminal, du fichier, et l'envoi d'un quatrième message de réponse d'instruction au premier terminal, dans lequel le quatrième message de réponse d'instruction contient une instruction que la suppression du fichier est réussie.

10. Procédé selon la revendication 6, comprenant en outre :
l'interrogation (702), par le second terminal, sur une taille d'un espace de stockage résiduel du second terminal lorsque le second terminal reçoit un cinquième message d'instruction envoyé par le premier terminal, dans lequel le cinquième message d'instruction contient une instruction d'interroger sur l'espace de stockage résiduel du second terminal ; et
l'envoi (703), par le second terminal, d'un cinquième message de réponse d'instruction au premier terminal, dans lequel le cinquième message de réponse d'instruction contient la taille de l'espace de stockage résiduel du second terminal.

11. Appareil (80) pour accroître un espace de stockage, comprenant :
une unité d'envoi (81), configurée pour envoyer un premier message d'instruction à un second terminal par l'intermédiaire d'une liaison, dans lequel le premier message d'instruction contient une instruction d'acquérir des informations d'un espace de stockage du second terminal ;
une unité de réception (82), configurée pour, après que l'unité d'envoi a envoyé le premier message d'instruction au second terminal, recevoir un premier message de réponse d'instruction envoyé par le second terminal par l'intermédiaire de la liaison, dans lequel le premier message de réponse d'instruction contient les informations de l'espace de stockage du second terminal ;
une unité de traitement (83), configurée pour définir un dossier virtuel dans un espace de stockage du premier terminal, et stocker, dans le dossier virtuel, les informations de l'espace de stockage du second terminal contenues dans le premier message de réponse d'instruction reçu par l'unité de réception ;
l'appareil (80) étant **caractérisé en ce que**
l'unité d'envoi (81) est en outre configurée pour, lorsque l'unité de réception reçoit une opération dans laquelle un utilisateur stocke un premier fichier désigné dans le dossier virtuel du premier terminal, envoyer un deuxième message d'instruction au second terminal, par l'intermédiaire de la liaison, la liaison étant une liaison Bluetooth, dans lequel le deuxième message d'instruction contient une instruction de stocker un fichier dans l'espace de stockage du second terminal, un chemin de stockage désigné et une taille du premier fichier désigné à stocker ; et lorsque l'unité de réception reçoit une instruction de confirmation envoyée par le second terminal, par l'intermédiaire de la liaison Bluetooth, envoyer le premier fichier désigné au second terminal, par l'intermédiaire de la liaison Bluetooth, dans lequel l'instruction de confirmation indique que l'espace de stockage du second terminal est apte à stocker le premier fichier désigné ; et
l'unité de traitement (83) est en outre configurée pour, lorsque l'unité de réception reçoit un deuxième message de réponse d'instruction envoyé par le second terminal, par l'intermédiaire de la liaison Bluetooth, stocker un nom de fichier du premier fichier désigné dans le dossier virtuel du premier terminal selon le chemin de stockage désigné, dans lequel le deuxième message de réponse d'instruction contient une instruction que le stockage du fichier est réussi.

12. Appareil (10) pour accroître un espace de stockage, comprenant :
une unité de réception (11), configurée pour recevoir un premier message d'instruction envoyé par un premier terminal par l'intermédiaire d'une liaison, dans lequel le premier message d'instruction contient une instruction d'acquérir des informations d'un espace de stockage d'un second terminal ;
une unité d'acquisition (12), configurée pour, lorsque l'unité de réception reçoit le premier message d'instruction envoyé par le premier terminal, acquérir les informations de l'espace de stockage du second terminal ;
une unité d'envoi (13), configurée pour envoyer un premier message de réponse d'instruction au premier terminal selon les informations de l'espace de stockage du second terminal acquises par l'unité d'acquisition par l'intermédiaire de la liaison, dans lequel le premier message de réponse d'instruction contient les informations de l'espace de stockage du second terminal ;
l'appareil (10) étant **caractérisé par**
une unité de traitement (14), configurée pour déterminer, lorsque l'unité de réception (11) reçoit un deuxième message d'instruction envoyé par le premier terminal par l'intermédiaire de la liaison, la liaison étant une liaison Bluetooth, si une taille d'un espace de stockage résiduel du second terminal est inférieure à une taille d'un premier fichier désigné à stocker, où le deuxième message d'instruction contient une instruction de stocker un fichier dans l'espace de stockage du second terminal, un chemin de stockage désigné et la taille du premier fichier désigné, où l'unité d'envoi (13) est en outre configurée pour, lorsque l'unité de traitement (14) acquiert que la taille de l'espace de stockage résiduel du second terminal n'est pas inférieure à la taille du premier fichier désigné, envoyer une instruction de confirmation au premier terminal par l'intermédiaire de la liaison Bluetooth, où l'instruction de confirmation indique que l'espace de stockage du second terminal est apte à stocker le premier fichier désigné ; et
une unité de stockage (15), stockant, selon le chemin de stockage désigné, dans l'espace de stockage du second terminal, le premier fichier désigné envoyé par le premier terminal et reçu par l'unité de réception (11), où
l'unité d'envoi (13) est en outre configurée pour envoyer le deuxième message de réponse d'instruction au premier terminal par l'intermédiaire de la liaison Bluetooth, où le deuxième message de réponse d'instruction contient une instruction que le stockage du fichier est réussi.
